# EUROPEAN PATENT SPECIFICATION

(11) **EP 2 711 629 B1**
(45) Date of publication and mention of the grant of the patent: **12.08.2015**
(21) Application number: 12185039.0
(22) Date of filing: 19.09.2012
(51) Int. Cl.: F02D 19/08, F23K 5/08, F23K 5/10, F02D 19/06

(54) **Treating pyrolysis oil for internal combustion engines**
Behandlung von Pyrolyseöl für Verbrennungsmotoren
Traitement de l'huile de pyrolyse pour moteurs à combustion interne

(43) Date of publication of application: 26.03.2014
(73) Proprietor: Caterpillar Motoren GmbH & Co. KG, 24159 Kiel (DE)
(72) Inventor: von der Osten-Sack, Andreas, 24145 Kiel (DE); Reeh, Jens-Uwe, 24220 Flintbek (DE)
(74) Representative: Kramer Barske Schmidtchen Patentanwälte PartG mbB

(56) References cited:
- EP-A2- 0 869 316
- GB-A- 2 349 175
- US-A1- 2008 035 187

## Description

### Technical Field

The present disclosure generally refers to treating fuel for internal combustion engines (ICEs) and particularly to treating alternative fuels such as pyrolysis oil based fuels. Moreover, the present disclosure generally refers to cleaning fuel systems of pyrolysis oil based fuel operated ICEs and particularly to cleaning pyrolysis oil based fuel treatment units of ICEs.

The present disclosure generally refers to internal combustion engines (ICEs) operable with multiple types of fuels and particularly to providing fuel supply configurations for the multiple types of fuels. Moreover, the present disclosure generally refers to cleaning fuel systems of pyrolysis oil based fuel operated ICEs and particularly to cleaning fuel recirculating units of ICEs.

### Background

Alternative fuels replacing crude oil based fuels are the subject of ongoing interest, in particular with respect to the replacement of crude oil based fuels such as diesel fuel, light fuel oil (LFO), and heavy fuel oil (HFO). Alternative fuels include first generation biofuels (e.g. palm oil, rapeseed oil, canola oil, oils based on animal fat) and second generation biofuels (e.g. oils made of non food corps, i.e. waste biomass).

Examples of second generation biofuels include "pyrolysis oils" obtained from the pyrolysis of, for example, wood or agricultural wastes, such as the stalks of wheat or corn, grass, wood, wood shavings, grapes, and sugar cane. In general, pyrolysis oil is predominantly produced by the "fast pyrolysis" technology, which comprises rapid pyrolysation of biomass in a fluidized bubbling sand bed reactor, wherein the solid heat-carrying medium is circulated and, therefore, the residence time of solids is well-controlled and high heating rates (up to 1000 °C/second) are obtained.

The chemical composition and the physical properties of alternative fuels such as pyrolysis oil based fuels can differ significantly from those of crude oil based fuels such as diesel fuel, LFO, and HFO, in particular with respect to the high content of water and oxygen, and the acidic value. Moreover, as pyrolysis oils include polar hydrocarbons and large amounts of water, they are almost immiscible with crude oil based fuels, which consist mainly of saturated olefinic and aromatic hydrocarbons. Finally, the acidic value of pyrolysis oil based fuels results in strong corrosion acting on contacted metal parts in engine systems.

Accordingly, the use of alternative fuels may require an adaptation of ICEs to those specific features of alternative fuels. This may in particular be the case for large ICEs operated at medium speed. Aspects of self-ignition ICEs for operation with alternative fuels are disclosed in the applications "OPERATING A POWER PLANT WITH ALTERNATIVE FUELS" and "SELF IGNITION OPERATION OF ALTERNATIVE FUEL INTERNAL COMBUSTION ENGINES" filed on February 28, 2012 by Caterpillar Motoren GmbH & Co. KG.

Moreover, a pyrolysis oil operated ICE using an oxygen enriched atmosphere is disclosed in GB 2 349 175 A.

The present disclosure is directed, at least in part, to improving or overcoming one or more aspects of the related prior art and particularly to simplify the operation of a power plant operating ICEs with alternative fuels such as pyrolysis oil based fuels.

### Summary of the Disclosure

According to an aspect of the present disclosure, pyrolysis oil treatment systems for treating pyrolysis oil for being used as a fuel of an internal combustion engine may comprise at least one pyrolysis oil tank, at least one cleaning medium tank, at least one treated pyrolysis oil tank, at least one reusable pyrolysis oil/cleaning medium mixture tank, and at least one pyrolysis oil treatment unit, wherein the at least one pyrolysis oil treatment unit is fluidly connected via a first flushing valve to the at least one pyrolysis oil tank and the at least one cleaning medium tank to receive pyrolysis oil and cleaning medium respectively therefrom, and the at least one pyrolysis oil treatment unit is further fluidly connected via a second flushing valve to the at least one treated pyrolysis oil tank and to the at least one reusable pyrolysis oil/cleaning medium mixture tank.

According to another aspect of the present disclosure, power plant systems may comprise a pyrolysis oil treatment system as disclosed herein and a power house with a conditioning unit fluidly connected to the pyrolysis oil treatment system via a fuel line and an internal combustion engine fluidly connected to the conditioning unit and configured for operation with a pyrolysis oil based fuel.

According to another aspect of the present disclosure, methods for operating a pyrolysis oil treatment unit of an internal combustion engine during a shut off procedure of the pyrolysis oil treatment unit may comprise receiving a signal indicating the request of shutting off the operation of the pyrolysis oil treatment unit, flushing the pyrolysis oil treatment unit with a cleaning medium, and releasing a mixture of cleaning medium and alternative fuel from the pyrolysis oil treatment unit.

According to another aspect of the present disclosure, use of an ethanol-based fuel is disclosed. The ethanol based fuel consisting of, based on the total vo lume of ethanol and castor oil, 40 to 90 % by vo lume ethanol and 60 to 10 % by volume castor oil, and optionally including one or more additives in a total amount of up to 10 wt.-% of the total weight of the ethanol and castor oil, for cleaning a pyrolysis oil treatment unit (1310) of a pyrolysis oil treatment system as described herein from pyrolysis oil.

Other features and aspects of this disclosure will be apparent from the following description and the accompanying drawings.

### Brief Description of the Drawings

Fig. 1 shows a schematic block diagram of a multi-fuel power plant;
Fig. 2 is a schematic block diagram illustrating an exemplary embodiment of a pyrolysis oil based fuel treatment unit and its interplay with respective tanks;
Fig. 3 is a schematic block diagram illustrating an exemplary embodiment of a pyrolysis oil based fuel conditioning section and a fuel recirculating unit;
Fig. 4 is a flowchart illustrating the operation of the multi-fuel power plant with different types of fuels;
Fig. 5 is a flowchart illustrating an exemplary fast switch over process from pyrolysis oil operation to cleaning fuel;
Fig. 6 is a flowchart illustrating an exemplary emergency switch off process of pyrolysis oil operation of a power plant system; and
Fig. 7 is a flowchart illustrating an exemplary emergency switch off process of pyrolysis oil treatment operation.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that the operation of a power plant with alternative fuels should not be affected by the specific features of the alternative fuel. For example, corrosive activity may be limited by temporally limiting the contact of a surface with a pyrolysis based fuel as much as possible. Flushing and thereby cleaning components after being in contact with alternative fuels may reduce any of those effects and, at the same time, bring that component or its related unit within the power plant in a condition that would allow resuming operation.

Regarding some aspects, the present disclosure may be based in part on the realization that the possibility to flush units of a power plant independently of another may increase flexibility, for example, when shutting off an engine.

The ability to independently flush and thereby clean, for example, the treatment unit and/or the conditioning unit for a pyrolysis oil based fuel may allow maintaining the respective unit in a condition for resuming operation. This is in particular the case when one, both, or up to all units operated with pyrolysis oil based fuel need to be flushed and cleaned following an emergency shut off procedure of the power plant or following an emergency switch to, for example, an auxiliary fuel.

Regarding some aspects, the present disclosure may be based in part on the realization that directly providing an auxiliary fuel to an engine unit may simplify the piping of the multi-fuel power plant. Moreover, it may increase flexibility with respect to intermixing an auxiliary fuel with a main fuel such as adding ethanol or a mainly ethanol based viscosity improver to a pyrolysis oil based fuel prior providing the same to the internal combustion engine.

Regarding some aspects, the present disclosure may be based in part on the realization that a flexible configuration of a unit providing an auxiliary fuel such as a mix of various components may allow adapting the mix in dependence of, for example, the type, quality, and/or temperature of the fuels.

To provide a multi-fuel power plant using one or more ICEs operated inter alia with alternative fuels and nevertheless providing power efficiently, adverse effects may be avoided or at least reduced when continuously operating the ICE in line with one or more of the herein proposed concepts.

While herein it is exemplarily referred to crude oil based fuel, alternative fuel, and cleaning fuel, with respect to various aspects this will be generally understood by the skilled person as examples for fuel types. Accordingly, crude oil based fuel and alternative fuel may be considered as examples of main fuels, each enabling long term engine operation. Cleaning fuel may be considered an example of an auxiliary fuel that allows switching between the main fuels (therefore also referred to switching fuel when used for that purpose). Thus, the cleaning fuel may clean the fuel system from the previously used main fuel, which may be in particular of interest if the main fuels are not chemical and/or physical compatible with each other.

Moreover, it will be understood that in the case that the cleaning fuel itself also allows long term operation of the engine, also the cleaning fuel may in some aspects be considered a main fuel.

The herein described multi-fuel power plant may be based on units that are all located at the same site. For example, the treatment (as well as the pyolysis process) and the power generation take place at the same site. However, similarly, one may perform the treatment of the pyrolysis oil based fuel at the site of the pyrolysis process and then transport the treated pyrolysis oil based fuel (by ship, train or other means) to the site of the power generation at which a fuel conditioning unit as well as the internal combustion engine(s) are provided.

Furthermore, the cleaning fuel is referred to as a fuel because the cleaning fuel may be used for cleaning the fuel system during continuous operation of the engine based on that cleaning fuel. However, the cleaning fuel may also be used as a cleaning fluid that is run through one or more components of the fuel system to clean the same while the engine is not operating, for example, when the engine is shut off for service or an emergency shut of had occurred. In particular, the cleaning fuel may be considered a cleaning fluid in the case that the providing of the pyrolysis oil based fuel, for example the pyrolysis process itself and the treatment of the pyrolysis oil based fuel, are located at a different location than the power generating process as in that case the cleaning fuel locally may not be used as a fuel.

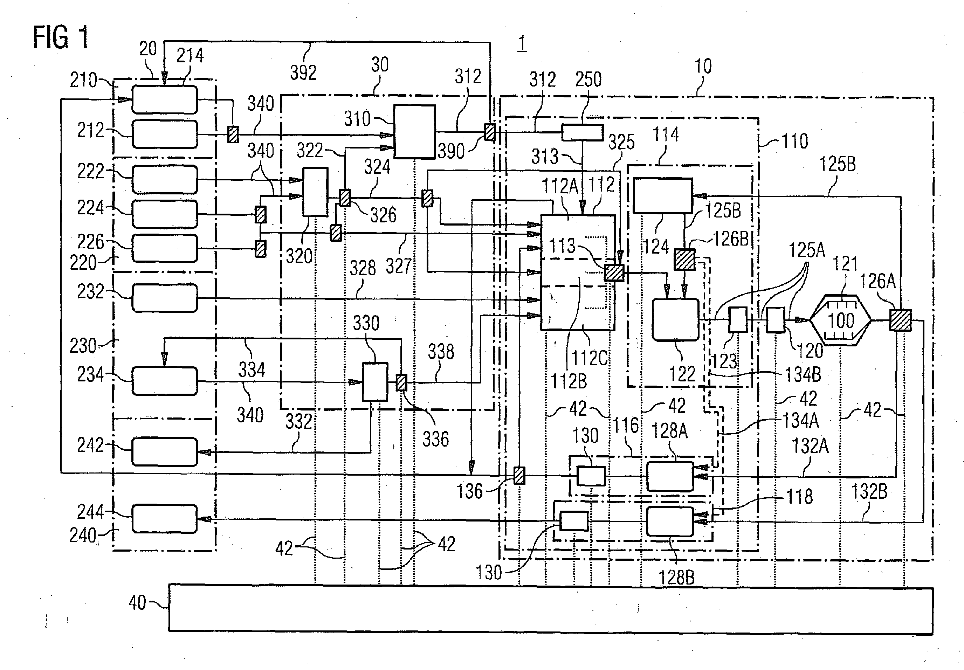

Referring to Fig. 1, a power plant system 1 may include a power house 10, a tank arrangement 20, and a fuel treatment building 30.

Power house 10 may include one or more ICEs 100 and, for one or more ICEs 100, a conditioning/circulating system 110. Conditioning/circulating system 110 may include a conditioning unit 112, a fuel recirculating unit 114, a first switching unit 116, and a second switching unit 118. Conditioning unit 112 may comprise a pyrolysis oil based fuel conditioning section 112A, a cleaning fuel conditioning section 112B, and a crude oil based fuel conditioning section 112C for the different types of fuel respectively that may need conditioning prior being supplied to ICE 100.

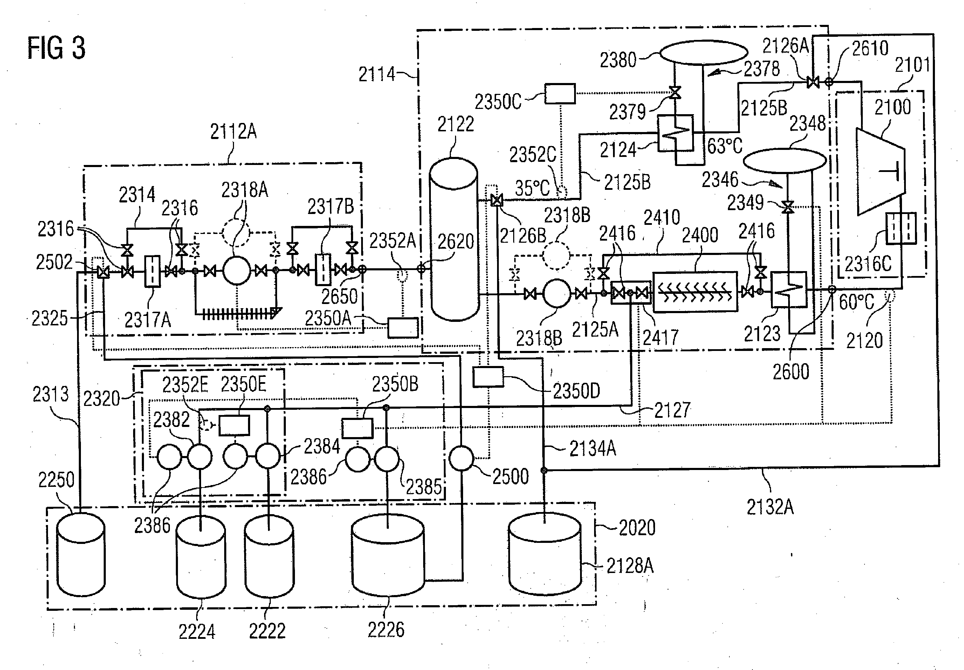

In some embodiments, only one, two, or more of those sections may be provided in conditioning unit 112 of Fig. 1. For example, in some embodiments, cleaning fuel conditioning section 112B may be replaced by a direct cleaning fuel supply configuration of fuel recirculating unit 114 as illustrated in connection with Fig. 3.

Tank arrangement 20 may include various tank sections such as main and auxiliary tank sections. For example, tank arrangement 20 may include - for example as a first main tank section - a pyrolysis oil based fuel tank section 210 for tanks such as a pyrolysis oil based fuel tank 212 and a reusable pyrolysis oil/cleaning fuel mixture tank 214.

Tank arrangement 20 may further include - for example as an auxiliary tank section - a cleaning fuel tank section 220 for components used for the cleaning fuel generation. Cleaning fuel tank section 220 includes, for example, a caster oil tank 222, an ethanol tank 224 (both for making a switching fuel), and/or tanks for the cleaning fuels such as a cleaning fuel premixed tank 226.

Tank arrangement 20 may further include - for example as a second main tank section - a crude oil based fuel tank section 230 for tanks for crude oil based fuels such as, for example, a Diesel fuel tank 232 and an HFO tank 234.

In addition, tank arrangement 20 may include a waste tank section 240 including an HFO waste tank 242 for receiving waste of the HFO treatment process explained below and a Diesel fuel/cleaning fuel waste tank 244 for receiving, for example, waste fuel generated during the switching between Diesel fuel operation and cleaning fuel operation.

While Fig. 1 is exemplarily directed to a multi-fuel power plant system, tank arrangements may include all or only a subgroup of the tanks mentioned in the case that the pyrolysis and treatment process is locally separated from the power generating process. For example, such a separated treatment process may be based on a tank arrangement with, for example, pyrolysis oil based fuel tank section 210 receiving pyrolysis oil based fuel from the pyrolysis process (not shown in the drawings) and cleaning fuel tank section 220, which in this case could be referred to as cleaning fluid tank section.

Referring again to cleaning fuel tank section 220 shown in Fig. 1, tanks for various components of the cleaning fuel may be provided. The cleaning fuel may be an ethanol-based fuel that may include besides ethanol additional components, for example, a bio-oil such as castor oil and optionally some additives.

For example, an ethanol-based fuel may consist of, based on the total volume of ethanol and castor oil, 20 to 90 % by volume ethanol and 80 to 10 % by volume castor oil (in particular 40 to 90% by volume ethanol and 60 to 10 % by volume castor oil), and optionally including one or more additives in a total amount of up to 3 wt.-% of the total weight of the ethanol and castor oil.

The ethanol may be from biological sources. The term "ethanol" as used herein and in the appended claims comprises both absolute ethanol (i.e. ethanol containing less than 2 % by volume (for example, less than 0,5 % by volume) water) and ethanol containing considerable amounts of water.

As a bio-oil, castor oil may be used in the present ethanol-based fuel. Caster oil is a vegetable oil obtained from castor seed of the castor plant *Ricinus communis.* Ricinoleic acid, which is the main fatty acid chain of castor oil (85 to 95 wt.-%), has a hydroxyl group at C₁₂, which provides the fatty acid chain with polar properties, promoting solubility in polar liquids like ethanol. At the same time, the remaining non-polar hydrocarbon chain of ricinoleic acid still provides sufficient non-polar character such that castor oil is miscible with non-polar liquids, like, for example, crude oil based fuels such as diesel fuel, LFO or HFO.

The ethanol content may be 40 to 80 % by volume (e.g. 45 to 65 % by volume or 45 to 55 % by volume or 48 to 52 % by volume) and the castor oil content is 60 to 20 % by volume (e.g. 55 to 35 % by volume or 55 to 45 % by volume or 52 to 48 % by volume). For economical reasons, the ethanol content of the ethanol-based fuel may be as high as possible, for example, 60 to 90 % by volume, or 70 to 90 % by volume, or 80 to 90 % by volume or 85 to 90 % by volume, in case the ethanol-based fuel is to be used for continuous (long-time) operation of an ICE, in particular a self-ignition ICE.

The ethanol-based fuel may optionally include one or more additives, for example, in a total amount of up to 3 wt.-% of the total weight of the ethanol and castor oil, preferably in a total amount of up to 2 wt.-%, in particular in a total amount of up to 1 wt.-% of the total weight of the ethanol and castor oil. Said additives may be selected from the group of additives consisting of thermal stabilizers, aging stabilizers, antioxidants, coloring agents, dyes, rust inhibitors, inhibitors of gum formation, metal deactivators, upper cylinder lubricants, friction modifiers, detergents, bacteriostatic agents, fungicides, microbiocides, and mixtures thereof.

The additives optionally included in the ethanol-based fuel may serve to improve one or more properties of the ethanol-based fuel, if considered to be necessary in view of the used engine type or any other circumstances, which require the use of additives. However, in view of environmental concerns (such as increased unwanted emissions), the ethanol-based fuel may be provided devoid of any additives.

Further details of an ethanol based fuel are disclosed, for example, in the application "ETHANOL-BASED FUEL AND USE THEREOF" filed on February 28, 2012 by Caterpillar Motoren GmbH & Co. KG.

In some embodiments, power plant system 1 may be operated only with cleaning fuel and alternative fuel. In that case, the configuration shown in Fig. 1 would simplify accordingly. Specifically, crude oil based fuel tank section 230 may not need to be provided and also fuel treatment building 30 and conditioning/circulating system 110 may be simplified accordingly, as will be apparent to the person skilled in the art.

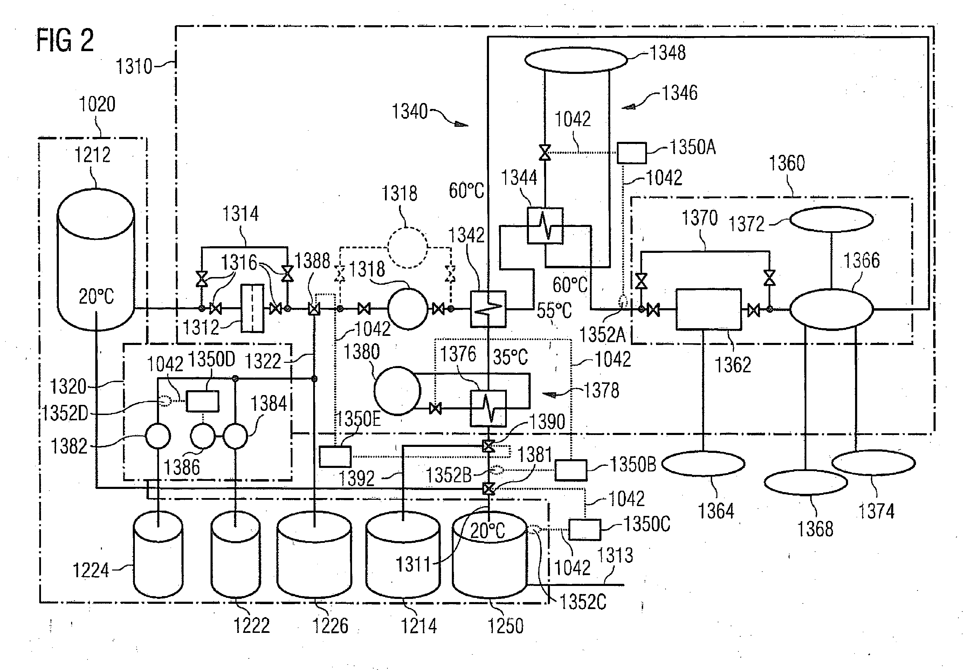

Fuel treatment building 30 may include one or more treatment units for the various fuels. For example, fuel treatment building 30 may include a pyrolysis oil based fuel treatment unit 310 fluidly connected to pyrolysis oil based fuel tank 212. Pyrolysis oil based fuel treatment unit 310 may include, for example, a centrifuge for extracting small size particles or similar devices. An exemplary embodiment of a pyrolysis oil based fuel treatment unit is disclosed in connection with Fig. 2.

Via pyrolysis oil based fuel pipes 312, 313, pyrolysis oil based fuel treatment unit 310 may be fluidly connected to pyrolysis oil based fuel conditioning section 112A of conditioning unit 112. In the embodiment of Fig. 1, an intermediary treated pyrolysis oil based fuel tank 250 may be provided to receive treated pyrolysis oil based fuel from pyrolysis oil based fuel treatment unit 310 and provide treated pyrolysis oil based fuel on request to pyrolysis oil based fuel conditioning section 112A. Intermediary treated pyrolysis oil based fuel tank 250 may be positioned close to or within any one of conditioning/circulating system 110 (as exemplarily shown in Fig. 1), tank arrangement 20 (as exemplarily shown in Fig. 2), or fuel treatment building 30, depending on having a power plant system at a single site or multiple sites.

In some embodiments, a valve unit 390 may be provided within pyrolysis oil based fuel pipe 312 and allow returning, for example, a mixture of alternative fuel and the cleaning fuel to reusable pyrolysis oil/cleaning fuel mixture tank 214 via a return line 392.

Fuel treatment building 30 may further include a cleaning fuel treatment unit 320 fluidly connected to tanks for the cleaning fuel or its components. As exemplary shown in Fig. 1, caster oil tank 222 and ethanol tank 224 may each be fluidly connected to cleaning fuel treatment unit 320. Within cleaning fuel treatment unit 320, the ethanol and the caster oil may be mixed together and filtered. In some embodiments, caster oil tank 222 and ethanol tank 224 may be combined in the required ratio before being supplied as cleaning fuel to cleaning fuel treatment unit 320, where then, for example, only filtering and/or temperature adjusting may take place.

Exemplary embodiments of cleaning fuel treatment units are further shown in Fig. 2 and Fig. 3. Depending on having a power plant system at a single site or multiple sites and the required flexibility for providing cleaning fuel, one or more cleaning fuel treatment unit 320 may be provided.

In some embodiments, alternatively or additionally pre-mixed ethanol and caster oil of cleaning fuel premixed tank 226 may be directly provided to any one of the units for cleaning or operating the engine as, for example, disclosed in connection with Fig. 3.

In some embodiments, the cleaning fuel may be provided to pyrolysis oil based fuel treatment unit 310 via a flushing connection 322, which may be fluidly connected to a pipe system within pyrolysis oil based fuel treatment unit 310 carrying the cleaning fuel or the ethanol only. For illustrative purposes, flushing connection 322 as shown in Fig. 1 is connected to a cleaning fuel pipe 324 via a cleaning fuel valve 326. In some embodiments, alternatively or additionally pre-mixed ethanol and caster oil of cleaning fuel premixed tank 226 and/or ethanol may be directly provided to pyrolysis oil based fuel treatment unit 310, for example, by providing valves at respective positions.

Cleaning fuel pipe 324 may fluidly connect cleaning fuel valve 326 with conditioning unit 112, for example, specifically with pyrolysis oil based fuel conditioning section 112A and/or cleaning fuel conditioning section 112B of conditioning unit 112. In some embodiments, cleaning fuel pipe 324 may even fluidly connect cleaning fuel valve 326 to the fuel system downstream of conditioning unit 112 using valves and respective fuel lines as exemplarily indicated in Fig. 1 by a connection line 325.

In some embodiments, ethanol tank 224 and/or cleaning fuel premixed tank 226 may additionally be fluidly connected to pyrolysis oil based fuel conditioning section 112A of conditioning unit 112, for example, via a fuel pipe 327 using one or more valves as exemplarily indicated in Fig. 1.

In some embodiments, Diesel fuel tank 232 may be fluidly connected to crude oil based fuel conditioning section 112C of conditioning unit 112 via Diesel fuel pipe 328 with or without passing any treatment unit.

Fuel treatment building 30 may further include an HFO treatment unit 330 fluidly connected to HFO tank 234 for cleaning the HFO, for example, via a centrifuge based system. HFO treatment unit 330 may be fluidly connected to crude oil based fuel conditioning section 112C via an HFO line 338. Waste from the cleaning process may be supplied to HFO waste tank 242 via HFO waste line 332. In addition, filtered HFO fuel may be returned to HFO tank 234 via HFO return line 334 in case that more HFO is cleaned than needed for operating ICE 100. An HFO valve 336 may be used to control the amount of HFO returned to HFO tank 234 and the amount of HFO provided to crude oil based fuel conditioning section 112C of conditioning unit 112 via HFO line 338.

In general, fuel connection lines 340 between the tanks of tank arrangement 20 and the respective treatment units may include pumps, control valves, pressure sensors, and/or temperature sensors (not shown). Moreover, the tanks and the treatment units may be fluidly connected to more than one conditioning unit 112. As an example, Fig. 1 illustrates only a single conditioning unit 112 and a single ICE 100 but the person skilled in the art will appreciate that additional conditioning units and ICEs may be provided in power house 10.

For the selection of what type of fuel from which section of conditioning unit 112 may be provided to ICE 100 via, for example, a fuel supply line 125, conditioning unit 112 may comprise a fuel selection valve 113 fluidly connected to each of pyrolysis oil based fuel conditioning section 112A, cleaning fuel conditioning section 112B (if provided), and crude oil based fuel conditioning section 112C as well as fuel recirculating unit 114. In addition, as indicated above, pre-mixed cleaning fuel (or a component thereof) may be provided from cleaning fuel premixed tank 226 via connection line 325 directly to fuel selection valve 113 or may be provided even into fuel recirculating unit 114. An example is disclosed in connection with Fig. 3, in which pre-mixed fuel (or a component thereof) may be provided from cleaning fuel premixed tank 226 to upstream of a homogenizer unit of the fuel recirculating unit.

In general, conditioning unit 112 may be configured to filter the various fuels and in some embodiments bring the various fuels to the needed temperature to ensure the required consistency and viscosity of the fuel when provided to ICE 100. An exemplary embodiment of pyrolysis oil based fuel conditioning unit is disclosed in connection with Fig. 3.

Moreover, within fuel supply line 125A, a viscosity sensor 120 may be provided prior ICE 100 as well as various temperature and additional viscosity sensors (not shown) may be provided within power house 10. Those components may be used, for example, to control a heat exchanger 123 arranged upstream of viscosity sensor 120 within fuel supply line 125A.

Fuel recirculating unit 114 of conditioning/circulating system 110 may be configured for supplying an engine fuel system 121 of ICE 100 with fuel via fuel supply line 125A. Fuel recirculating unit 114 may comprise a circulation tank 122 and a fuel cooling unit 124. Circulation tank 122 may be fluidly connected with conditioning unit 112 and via fuel supply line 125A with engine fuel system 121. A further exemplary embodiment of a fuel recirculating unit is disclosed in connection with Fig. 3.

Circulation tank 122 may be refilled with the respective fuel from conditioning unit 112 to compensate for the fuel combusted by ICE 100. During stable operation with one type of fuel, fuel unused by ICE 100 may be returned to circulation tank 122 via a fuel return line 125B. Depending on the type of fuel, the returned unused fuel may be cooled by fuel cooling unit 124, if required. Accordingly, a fuel recirculating cycle may comprise, starting at viscosity sensor 120, engine fuel system 121, fuel cooling unit 124, circulation tank 122, and heat exchanger 123 as well as fuel supply line 125A and fuel return line 125B.

Referring to Fig. 1, a first release valve unit 126A may be provided in the fuel recirculating cycle to allow releasing unused fuel from the fuel recirculating cycle and stopping any backflow of unused fuel to circulation tank 122. Accordingly, circulation tank 122 will be refilled essentially only by conditioning unit 112 or, in some operation modes, via direct fuel connections to fuel tanks, for example, with ethanol or premixed cleaning fuel. Thus, in case of changing the type of fuel, releasing the fuel via first release valve unit 126A may accelerate emptying the fuel recirculating cylce with the earlier provided fuel. Partly or completely closing first release valve unit 126A may then allow cleaning the fuel recirculating cycle, in particular, the components of fuel recirculating unit 114 downstream of first release valve unit 126A, from the previously provided fuel as will be explained below.

Fuel recirculating unit 114 may be considered to include first release valve unit 126A and/or viscosity sensor 120, although in Fig. 1 (an dfi.g 3), first release valve unit 126A and viscosity sensor 120 are shown external to the dashed box indicating fuel recirculating unit 114 to simplify the drawing.

As shown in Fig. 1, first release valve unit 126A may optionally be connected to first switching unit 116 and/or second switching unit 118 to allow faster switching between fuel types.

As pointed out above, power plant system 1 may be operated with multiple types of fuel, for example, only with the cleaning fuel and an pyrolysis oil based fuel (for example both fuels then acting as main fuels). Then, second switching unit 118 may not be provided and tank arrangement 20 may not include crude oil based fuel tank section 230, treatment building may not include HFO treatment unit 330, and conditioning unit 112 may not include crude oil based fuel conditioning section 112C.

First switching unit 116 may include a first switch over tank 128A and second switching unit 118 may include a second switch over tank 128B. Each of first switching unit 116 and second switching unit 118 may include a switch over pump 130, wherein first switch over tank 128A and second switch over tank 128B may each be fluidly connected to outlets of first release valve unit 126A via separate switch over lines 132A and 132B, respectively.

Providing two separate switch over lines 132A, 132B allows providing separate fuel storing systems for a pyrolysis oil based fuel/cleaning fuel mixture as well as crude oil based fuel/cleaning fuel mixture, for example a Diesel fuel/cleaning fuel mixture.

In embodiments where the cleaning fuel may be operated as a main fuel only and not as a switching fuel between pyrolysis oil based fuel and crude oil based fuel operation, first switch over tank 128 may more generally also be referred to as a pyrolysis oil based fuel/cleaning fuel mixture tank.

For example, a pyrolysis oilbased fuel/cleaning fuel mixture may be returned to pyrolysis oil based fuel tank 212 via first switching unit 116 and a Diesel fuel/cleaning fuel mixture may be directed to Diesel fuel/cleaning fuel waste tank 244 via second switching unit 118. Diesel fuel/cleaning fuel waste tank 244 may be connected to additional combustion units for further reuse of the returned fuel mixture.

Moreover, an outlet of first switching unit 116 may be fluidly connected to pyrolysis oil based fuel conditioning section 112A to be reused during a switching process, for example, controlled via a reuse valve 136.

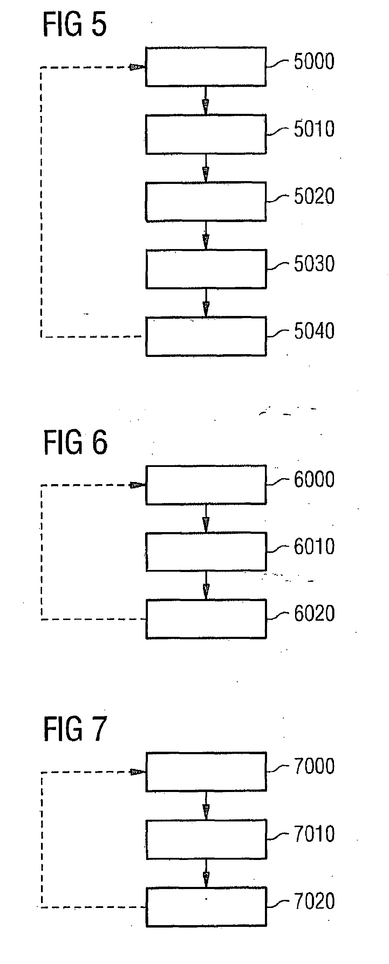

In Fig. 1, a second position for a second release valve unit 126B to allow releasing unused fuel from the fuel recirculation line by switch over lines 134A and 134B is indicated by dashed lines. Specifically, second release valve unit 126B may be fluidly positioned between fuel cooling unit 124 and circulation tank 122 and provide fuel to first switching unit 116. A related configuration is further disclosed in connection with Fig. 3. In some embodiments, one of or both of first release valve unit 126A and second release valve unit 126B may be provided and, for example, used to release fuel from the fuel recirculating unit 114. Depending on the type, urgency, reason etc. of the fuel release one or the other or both valve units may be used at the same time or one after the other. Exemplary related flushing processes are disclosed, for example, in connection with Fig. 6 and Fig. 7.

The operation of power plant system 1 may be controlled by a control system. Specifically, the control system may be configured to control operation of ICE 100 based on a required mechanical output. The control system may further control the operation with the various types of fuels as well as the switching between the various types of fuels with a continuously operated engine.

The control system may include a control unit 40, one or more control sensors such as temperature sensors (not shown), pressure sensors (not shown), and fluid viscosity sensors (for example viscosity sensor 120), and control lines. Exemplary sensor configurations are further described in connection with Fig. 2 and Fig. 3. Control sensors may be configured to measure, for example, the temperature and/or the pressure of the charge air and the exhaust gas at the various pressure stages as well as the temperature, viscosity, and/or pressure of the various fuels/fluids in fuel treatment building 30, conditioning/circulating system 110, engine fuel system 121, and an injection system of ICE 100 and provide those data to control unit 40. In the drawings, most sensors not shown for simplifying the same.

Control unit 40 may be a single microprocessor or plural microprocessors that may include means for controlling, among others, an operation of the various components of power plant system 1, for example, release valve units 126A, 126B, cleaning fuel valve 326, HFO valve 336, fuel selection valve 113, and heat exchanger 123. Control unit 40 may be a general engine control unit (ECU) capable of controlling numeral functions associated with power plant system 1 and/or its associated components such as ICE 100. Control unit 40 may include all the components required to run an application such as, for example, a memory, a secondary storage device, and a processor such as a central processing unit or any other means known in the art for controlling power plant system 1 and its various components and units.

Various other known circuits may be associated with control unit 40, including power supply circuitry, signal-conditioning circuitry, communication circuitry, and other appropriate circuitry. Control unit 40 may analyze and compare received and stored data, and, based on instructions and data stored in memory or input by a user, determine whether action is required. For example, control unit 40 may compare received values with target values stored in memory, and based on the results of the comparison, control unit 40 may transmit signals to one or more components to alter the operation status thereof.

Control unit 40 may include any memory device known in the art for storing data relating to operation of the combustion engine and its components. The data may be stored in the form of one or more maps that describe and/or relate, for example, injection timing. Each of the maps may be in the form of tables, graphs, and/or equations, and include a compilation of data collected from lab and/or field operation of the combustion engine. The maps may be generated by performing instrumented tests on the operation of the combustion engine under various operating conditions while varying parameters associated therewith. The controller may reference these maps and control operation of one component in response to the desired operation of another component.

Specifically, control unit 40 may be configured to receive inputs from the various control sensors. Using the inputs from the control sensors, control unit 40 may be configured to control - via control connections lines 42 (indicated as dotted lines in Fig. 1) - the operation of ICE 100, conditioning unit 112, viscosity sensor 120, fuel cooling unit 124, first release valve unit 126A (126B), switch over pumps 130, reuse valve 136, pyrolysis oil based fuel treatment unit 310, cleaning fuel treatment unit 320, cleaning fuel valve 326, HFO treatment unit 330, HFO valve 336, fuel selection valve 113, and heat exchanger 123.

A common control unit or separate control units may be provided for the various units. Moreover, depending on having a power plant system at a single site or multiple sites, a common control unit or separate control units may be provided for the pyrolysis process and the power generating process and the related units.

In some embodiments, a power plant system may comprise a tank arrangement comprising at least one crude oil based fuel tank and at least one alternative (for example pyrolysis oil based) fuel tank, a fuel treatment system comprising a crude oil based fuel treatment plant fluidly connected to the at least one crude oil based fuel tank and an alternative (for example pyrolysis oil based) fuel treatment plant fluidly connected to the at least one alternative fuel tank, and at least one engine unit comprising an internal combustion engine and a fuel type controling module, the fuel type controling module comprising a fuel conditioning unit fluidly connected to the crude oil based fuel treatment plant and the alternative fuel treatment plant, a fuel recirculating system with a circulating tank, which is fluidly connected to the fuel conditioning unit and the internal combustion engine, and a fuel cooling unit, which is fluidly connected to the internal combustion engine via a valve unit and the circulating tank for providing a fuel engine cycle, a first switching unit comprising a first switch over tank fluidly connected to the valve unit and a first switching pump fluidly connected to the first switch over tank and at least one of the alternative fuel tank and the fuel conditioning unit, a second switching unit comprising a second switch over tank fluidly connected to the valve unit and a second switching pump fluidly connected to the second switch and a waste fuel tank. The engine may be configured to operate in a self-igniting mode for crude oil based fuel and alternative fuel. The tank arrangement may comprise a switch over fuel tank that is fluidly connected to the alternative fuel treatment plant. The crude oil based fuel treatment plant, the alternative fuel treatment plant, and the conditioning unit may be configured to heat the respective fuel to its required temperature, thereby providing the required viscosity. The multi-fuel power system may further comprise a viscosity sensor provided in the fluid connection between the circulating tank and the internal combustion engine; and a control unit configured to receive viscosity data of the fluid and to control the heating of at least one of the crude oil based fuel treatment plant, the alternative fuel treatment plant, and the conditioning unit.

Fig. 2 and Fig. 3 illustrate exemplary embodiments of the various units disclosed in connection with Fig. 1. To simplify the drawings, some features illustrated in Fig. 1 may not be shown in Fig. 2 or Fig. 3 and vice versa. This may in particular be relating to the fact that the power plant system may be located at a common or several sites for the pyrolysis/treatment process and the power generating process. Accordingly, features of the various embodiments may be combined within the understanding of the person skilled in the art.

Fig. 2 shows an exemplary treatment unit 1310 that may be part of a power plant system as disclosed in Fig. 1 or may be associated with a pyrolysis reactor (not shown) for performing a pyrolysis process to generate raw pyrolysis oil. Treatment unit 1310 may be configured to treat that pyrolysis oil prior to using the same within and/or transporting the same to a power generating site. To indicate that the pyrolysis oil is not yet used as a fuel, in the following it is referred to as pyrolysis oil. However, in general it could be also referred to as a pyrolysis oil based fuel (as done in connection with Fig. 1) as in principle the treatment unit 1310 could be part of a single site power plant system and then would be considered one of multiple fuels.

Treatment unit 1310 is configured to receive pyrolysis oil from a pyrolysis oil tank 1212 being part of a tank arrangement 1020 and containing, for example, raw pyrolysis oil at a temperature of, for example, 20 °C (ambient temperature). After the treatment of the raw pyrolysis oil within treatment unit 1310, treated pyrolysis oil may be stored in a treated pyrolysis oil tank 1250. Treated pyrolysis oil tank 1250 may be fluidly connected to treatment unit 1310 via a fuel line 1311 and store treated pyrolysis oil, for example, again at ambient temperature. From there, treated pyrolysis oil may be provided to the respective condition section of the conditioning unit via an alternative fuel line 1313 and burned by the internal combustion engine.

For treating the pyrolysis oil, the fuel path through the treatment unit 1310 may comprise a raw filter 1312 in single or double filter design and related thereto a by-pass 1314 of raw filter 1312.

In general, Fig. 2 illustrates schematically positions of two-way valves 1316 that may be helpful to control the fuel path (in Fig. 2 - and also Fig. 3 - only selected valves are provided with reference numerals to simplify illustration). Some of those two-way valves may be combined into three-way valves. Alternative valve arrangements may be known to the person skilled in the art.

Fluidly arranged downstream of raw filter 1312, treatment unit 1310 may comprise one or more feed pumps 1318 for pumping the pyrolysis oil through a treatment loop 1340.

At the beginning of treatment loop 1340, the pyrolysis oil is heated initially in a heat recuperator 1342 to, for example, 55 °C using the heat of the pyrolysis oil leaving treatment loop 1340. Heat recuperator 1342 may therefore comprise a heat receiving fuel/fluid passage and a heat dispensing fuel/fluid passage.

The pyrolysis oil is then guided to and further heated in a final heater 1344 to, for example, 60 °C. Final heater 1344 may be integrated into a heating cycle 1346 using a heating media and comprising, for example, a storage tank 1348 at a temperature of, for example, 80 °C. Heating cycle 1346, for example a valve upstream final heater 1344, may be controlled by a programmable logic controller 1350A receiving temperature data from a temperature sensor 1352A position downstream of final heater 1344. Temperature sensor 1352A may, for example, be positioned at the entrance of a separation unit 1360.

In Fig. 2 - and also Fig. 3 - only selected control lines (shown as dotted lines) are provided with reference numeral 1042 to simplify illustration.

Treatment loop 1340 may further comprise a separation unit 1360. Separation unit 1360 may comprise a decanter 1362 for separating solid sludge 1364 and a separator 1366 for separating liquid sludge 1368.

In some embodiments, a by-pass for by-passing decanter 1362 and/or separator 1366 may be provided, for example, in case that the pyrolysis oil may comprise sediments at less than, for example, <2 vol.-%. In Fig. 2, a by-pass 1370 for by-passing decanter 1362 is shown. Separator 1366 may use a water supply 1372 as well as a used water reservoir 1374.

An exit of separation unit 1360 may be fluidly connected to heat recuperator 1342, specifically the heat dispensing fluid passage, such that the treated pyrolysis oil may pre-heat the incoming untreated pyrolysis oil as mentioned above. Treated pyrolysis oil may exit heat recuperator 1342 at a temperature of, for example, 35 °C.

In some embodiments, prior leaving treatment unit 1310, pyrolysis oil may be further cooled by a treated pyrolysis oil cooler 1376. Treated pyrolysis oil cooler 1376 may be controlled by a programmable logic controller 1350B receiving temperature data from a temperature sensor 1352B position downstream of treated pyrolysis oil cooler 1376, for example, at the entrance of treated pyrolysis oil tank 1250. Treated pyrolysis oil cooler 1376 may be integrated into a cooling cycle 1378 using a cooling media and comprising, for example, a storage tank 1380.

In some embodiments, the piping for the treated pyrolysis oil may be too long, for example, between separator 1366 and treated pyrolysis oil tank 1250. Then, a small interim tank with a transfer pump (not shown in Fig. 2) may be installed in that piping, for example, between heat recuperator 1342 and treated pyrolysis oil cooler 1376.

In some embodiments, to avoid overfilling of treated pyrolysis oil tank 1250, a programmable logic controller 1350C receiving level data from a level sensor 1352C position at treated pyrolysis oil tank 1250 may guide treated pyrolysis oil into pyrolysis oil tank 1212 by switching a (three-way) return valve 1381 positioned upstream of treated pyrolysis oil tank 1250. In Fig. 2, (three-way) return valve 1381 is exemplarily positioned downstream of treated pyrolysis oil cooler 1376.

Moreover, as shown in Fig. 2, treatment unit 1310 is configured for being flushed with cleaning fuel (cleaning fluid) from a cleaning fuel tank 1226 or from cleaning fuel (fluid) being composed in a cleaning fuel (fluid) treatment unit 1320. Specifically, in the embodiment of Fig. 2, the flushing may be performed with the cleaning fuel (fluid) within switch over tank and/or a ratio of the components of the cleaning fuel (fluid) such as castor oil and ethanol as set in cleaning fuel treatment unit 1320.

In some embodiments, cleaning fuel (fluid) treatment unit 1320 may comprise an ethanol pump 1382 pumping ethanol from an ethanol tank 1224 and a castor oil pump 1384 pumping castor oil from a castor oil tank 1222. The pumping speed of a pump engine 1386 for the pumps (exemplarily shown in Fig. 2 for the castor oil pump 1384) may be adjusted via a programmable logic controller 1350D receiving volume data from a volume sensor 1352D positioned downstream of, for example, ethanol pump 1382. Accordingly, a ratio of, for example, 80 vol.-% castor oil and 20 vol.-% ethanol may be provided at a fuel exit of cleaning fuel treatment unit 1320 as a cleaning fluid for flushing the fuel path within treatment unit 1310. Volume ratios as disclosed above may be similarly generated.

With respect to the flushing process, in the exemplary embodiment of Fig. 2, the cleaning fuel (fluid) may enter the fuel path within treatment unit 1310 via a fuel line 1322 downstream of raw filter 1312 and by-pass 1314 at a first (three-way switch over) flushing valve 1388.

At a second flushing valve 1390 positioned at the exit of treatment unit 1310, the fluid content of treatment loop 1340 may be directed to a reusable pyrolysis oil/cleaning fuel mixture tank 1214 via a return fuel line 1392. Reusable pyrolysis oil/cleaning fuel mixture tank 1214 may be in some embodiments, for example, the reusable pyrolysis oil/cleaning fuel mixture tank used to receive the mixture of pyrolysis oil and switching fuel when switching between fuel types.

A programmable logic controller 1350E may control the first and second, for example, for example three-way, flushing valves 1388, 1390.

The programmable logic controllers indicated with respect to Fig. 2 may be part of the control unit 40 shown in Fig. 1 or may interact with the same. The same applies to those programmable logic controllers described below in connection with Fig. 3.

Tank arrangement 1020 may include castor oil tank 1222, ethanol tank 1224, cleaning fuel tank 1226 as well as treated pyrolysis oil tank 1250 and reusable pyrolysis oil/cleaning fuel mixture tank 1214.

As indicated herein, in a single site configuration, the cleaning of treatment unit 1310 may be performed during operation of ICE 100 with the cleaning fuel (acting as a fuel). In that case, the pyrolysis oil/cleaning fuel mixture may be directed via treated pyrolysis oil tank 1250 to the power house, specifically the ICE.

Moreover, the cleaning of treatment unit 1310 may be performed independently of the operation of ICE 100 (being either completely stopped or operated with a different fuel), then the cleaning fuel acting as a fluid may be directed to reusable pyrolysis oil/cleaning fuel mixture tank 1214.

Similarly, in case of treatment unit 1310 being located at the pyrolysis process site and separate from the power generation site, the cleaning fuel acting as a fluid may be directed to reusable pyrolysis oil/cleaning fuel mixture tank 1214.

Moreover, not all components of treatment unit 1310 may need to be cleaned by the cleaning fuel. For example, raw filter1312 may be separately cleaned or replaced and the pipes and valves of by-pass 1314 may not need to be cleaned at all. However, similar to Fig. 3, raw filter 1312 could also be part of the flushing path of the cleaning fuel (fluid).

Referring to Fig. 3, an exemplary conditioning section 2112A for conditioning pyrolysis oil and an exemplary fuel recirculating unit 2114 are disclosed that may be used to supply fuel to an internal combustion engine ICE 2100 at the power generation site.

As shown in Fig. 3, conditioning section 2112A and fuel recirculating unit 2114 may receive fuels from a tank arrangement 2020 and/or return fuels thereto. Tank arrangement 2020 may comprise a treated pyrolysis oil tank 2250, an ethanol tank 2224, a castor oil tank 2222, and a cleaning fuel premixed tank 2226. In addition, tank arrangement 2220 may comprise a switch over tank 2128A receiving a mixture of pyrolysis oil and the cleaning/switching fuel as well as a switch over tank (not shown in Fig. 3) receiving a mixture of, for example, Diesel fuel and the switching fuel. In some embodiments, the switch over tanks may be arranged close to fuel recirculating unit 2114 and may even be considered to be a part of its conditioning/circulating system.

Conditioning section 2112A may be configured to receive treated pyrolysis oil from treated pyrolysis oil tank 2250. Conditioning section 2112A may comprise a raw filter 2317A and related thereto a by-pass 2314 of raw filter 2317A including one or more valves 2316.

Conditioning section 2112A may further comprise one or more feed pumps 2318A and, in some embodiments, additionally an automatic filter 2317B having a pore size of, for example, 10 µm. Feed pumps 2318A may be fluidly connected to a return line (over flow line) of the pressure side of feed pumps 2318A used in case the engine is not operated and the fuel is pumped in a circle. For that purpose, a pressure holding valve with proportional characteristic and a line with cooling means may be included to compensate the energy increase.

The pumping speed of feed pump(s) 2318A may be adjusted via a programmable logic controller 2350A receiving volume data from a volume sensor 2352A positioned downstream of conditioning section 2112A. Thereby, treated and conditioned pyrolysis oil may be provided to fuel recirculating unit 2114 in a volume controlled manner. For that purpose, a conditioning unit exit 2650 of conditioning unit 2112 may be fluidly connected to a conditioned fuel inlet 2620 of fuel recirculating unit 2114.

Fuel recirculating unit 2114 may comprise a circulation tank 2122 and one or more circulating pumps 2318B for pumping the fuel through the circle, specifically via a fuel supply line 2125A and via a fuel return line 2125B and various elements provided therein. For example, within fuel supply line 2125A, fuel recirculating unit 2114 may further comprise a homogenizer 2400 and related thereto a by-pass 2410 of homogenizer 2400 using valves, for example, one or more pairs of two-way valves 2416 (as shown in Fig. 3), or a three-way valve. By-pass 2410 may, for example, be activated for HFO fuel, Diesel fuel, or cleaning fuel operation.

Suitable homogenizers for carrying out the required treating of the pyrolysis oil include dynamic rotor-stator homogenizers, which consist of concentric tool rings that are radially slotted and/or drilled. The annular shearing gap of such dynamic rotor-stator homogenizers is generally 1 mm or less. Such dynamic rotor-stator homogenizers are available, for example, from BWS Technology GmbH, Grevenbroich, Germany (type: Supraton^{®} High shear in-line Homogenizers). The Sauter Mean Diameter (SMD) D₃₂ of droplets of (a) in the emulsion obtained by such a dynamic rotor-stator homogenizer can be controlled by adjusting the annular shearing gap to an appropriate value, for example of 0.1 to 0.8 mm.

Downstream of homogenizer 2400, a heat exchanger 2123 is provided for heating the fuel prior entering an engine unit 2101 to a temperature of, for example, 60 °C. Heat exchanger 2123 may be integrated into a heating cycle 2346 using a heating media and comprising, for example, a storage tank 2348 at a temperature of, for example, 80 °C. Heating cycle 2346, in particular valve 2349, may be controlled by a programmable logic controller 2350B receiving viscosity data from a viscosity sensor 2120 positioned downstream of heat exchanger 2123, for example, at the entrance to engine unit 2101.

Engine unit 2101 may comprise a double filter 2316C and ICE 2100 including an engine fuel system (not shown). The fuel from heat exchanger 2123 may pass double filter 2316C and be provided to the engine fuel system.

Unused fuel may exit engine unit 2101 and be returned into fuel recirculating unit 2114 via fuel return line 2125B. Specifically, the unused fuel may be cooled in cooler 2124 to a temperature of, for example, 35 °C. Cooler 2124 may be integrated into a cooling cycle 2378 using a cooling media and comprising, for example, a storage tank 2380. Cooling cycle 2378 and in particular valve 2379 may be controlled by a programmable logic controller 2350C receiving temperature data from a temperature sensor 2352C positioned downstream of cooler 2124.

After being cooled, the fuel may mix in circulation tank 2122 with fuel provided by the conditioning unit, for example, by conditioning section 2112A shown in Fig. 3. Cooling may not needed to be performed for all types of fuels. Thus, in some embodiments using, for example, only pyrolysis oil and cleaning fuel as fuels, cooler 2124 may not be provided.

Accordingly, a fuel recirculating cycle may comprise, starting at viscosity sensor 2120, engine unit 2101 (specifically double filter 2316C and, for example, portions or all of engine fuel system of ICE 2100 depending on the engine fuel system's design), cooler 2124 (in case operation with a fuel that requires cooling is intended), circulation tank 2122, circulating pumps 2318B, homogenizer 2400/by-pass 2410, and heat exchanger 2123.

Moreover, as shown in Fig. 3, conditioning section 2112A, fuel recirculating unit 2114, engine unit 2101 may be configured for being flushed with cleaning fuel. The cleaning fuel may be considered a cleaning fluid as discussed above in connecting with Fig. 2 in case the flushing is performed without using the fluid for operating the engine.

The cleaning fuel (fluid) may be stored, for example, in cleaning fuel (fluid) premixed tank 2226. In some embodiments, the cleaning fuel (fluid) may be mixed from separate tanks as described below with respect to a cleaning fuel treatment unit 2320 and used to operate the engine with the cleaning fuel. In some engine operation procedures, the cleaning fuel can be considered a switching fuel when it is used to allow switching between fuels that, for example, are incompatible.

In general, the flushing may be performed with the cleaning fuel of cleaning fuel premixed tank 2226 and/or a ratio of the components of the cleaning fuel such as castor oil and ethanol as set in cleaning fuel treatment unit 2320.

In the exemplary embodiment of Fig. 3, cleaning fuel (fluid) may be pumped via a flushing line 2325 by a flushing pump 2500 from cleaning fuel premixed tank 2226 to a conditioning unit flushing valve unit 2502 (for example a three-way valve) arranged, for example, within a fuel line 2313 and positioned at the entrance of conditioning section 2112A. From there, conditioning section 2112A and fuel recirculating unit 2114, in particular their components, may be flushed with the cleaning fuel (fluid).

While in Fig. 1 a fluid connection to cleaning fuel premixed tank 2226 is shown, in addition or alternatively a fluid connection to a cleaning fuel treatment unit as described below may be provided.

In case of the operation of the engine being continued, the cleaning fuel will replace the fuel within conditioning 2112A and fuel recirculating unit 2114 with time. Once the complete fuel system is cleaned from pyrolysis oil based fuel, the cleaning fuel may also be provided directly into the fuel recirculating cycle, for example, upstream of homogenizer 2400. Then, conditioning unit flushing valve unit 2502 may be closed and the conditioning section 2112A is ready for maintenance or just for being resupplied with pyrolysis oil based fuel.

To increase the switch over time and remove pyrolysis oil based fuel quicker from the fuel recirculating cycle, release valves such as a first release valve 2126A and/or second release valve 2126B (for example, three-way valves) may be provided in the fuel recirculating cycle und used to release fuel mixtures from the fuel recirculating cycle to a switch over tank 2128A.

For releasing the fuel from the system, first release valve 2126A may be positioned upstream of cooler 2124 and second release valve 2126B may be positioned between cooler 2124 and circulation tank 2122. First release valve 2126A and second release valve 2126B may be fluidly connected via respective flushing lines 2132A, 2134A (in the context of switching fuels also referred to as a switch over line) to switch over tank 2128A.

In some embodiments, the released fuel may be directed directly or via that switch over tank 2128A to a reusable pyrolysis oil/cleaning fuel mixture tank (as indicated in Fig. 1).

Moreover, ICE 2100 may be configured for being operated with the cleaning fuel. In that case, the cleaning fuel may be considered a main fuel and also be referred to as switching fuel (when used between two types of main fuels). The cleaning fuel may be provided into the fuel recirculating cycle, for example, upstream of homogenizer 2400 via cleaning fluid input line 2127 at a supply valve unit 2417 that allows adding cleaning fuel to the fuel within the fuel recirculating cycle until the main fuel previously being in the fuel recirculating cycle (such as HFO fuel, Diesel fuel, or an alternative fuel such as pyrolysis based fuel) is completely replaced by the switching fuel.

In case of the pyrolysis oil based fuel decreasing in quality, a fuel parameter value may be detected that requires fast switching to a different fuel while maintaining the engine running. In that case, cleaning fuel may be provided downstream of circulating pump 2318B into fuel recirculating cycle. To enable a quick initial flushing, first release valve 2126A is switched to release any fuel exiting engine unit 2101 to switch over tank 2128A. At the same time or thereafter, also second release valve 2126B may be opened to release any pyrolysis oil based fuel and flush the respective piping with cleaning fuel.

Additional release valves may be provided (not shown) upstream of circulating pump 2318B (to release circulation tank 2122) and downstream of homogenizer 2400 (to clean the same), those valves, for example, also be fluidly connected to switch over tank 2128A.

In case of an emergency stop, the alternative fuel within conditioning section 2112A and fuel recirculating unit 2114 as well as the cleaning fuel (fluid) may be flushed through and out of the system by stopping the pyrolysis oil in-flow and initiating the cleaning fuel flow. In that case, no fuel is burned and the fuel within conditioning section 2112A and fuel recirculating unit 2114 may need to be released to achieve cleaning. The release (flushing) may be achieved by opening one or more of release valves within fuel recirculating unit 2114 such as release valves 2126A, 2126B provided within the fuel recirculating cycle.

In some emergency stops, a quick cleaning of engine unit 2101 may be desired such that cleaning fuel is provided downstream circulating pump 2318B (upstream of engine unit 2101) and release valves 2126A and 2126B may be employed accordingly.

A programmable logic controller 1350D may control the conditioning unit flushing valve unit 2502 and the release valves 2126A, 2126B as well as the flushing pump 2500, thereby controlling the release of the fuel from conditioning section 2112A and fuel recirculating unit 2114 as well as the passing (flushing speed) of cleaning fuel (fluid) through conditioning section 2112A and fuel recirculating unit 2114. Similarly, the pumps 2382, 2384, 2386 for the components of as well as the mixed cleaning fuel may be controlled to achieve the desired cleaning.

In general, the cleaning/switchinig fuel may be pumped into the fuel recirculating cycle directly from cleaning fuel premixed tank 2226 by a cleaning fuel pump 2385 or may be provided by cleaning fuel treatment unit 2320. In some embodiments, cleaning fuel treatment unit 2320 may comprise an ethanol pump 2382 pumping ethanol from ethanol tank 2224 and a castor oil pump 2384 pumping custor oil from castor oil tank 2222.

As exemplarily shown in Fig. 3, the pumping speeds of respective pump engines for the various pumps may be adjusted via programmable logic controller 2350B for cleaning fuel pump 2385 and ethanol pump 2382 based on viscosity data received from viscosity sensor 2120 positioned downstream of heat exchanger 2123 and/or via programmable logic controller 2350E for castor oil pump 2384 based on volume data received from flow sensor 2352E positioned downstream of ethanol pump 2382. Accordingly, a volume ratio of castor oil and ethanol - that may be usually set to, for example, 80 vol.-% castor oil and 20 vol.-% ethanol.

In a further aspect, the above configuration may be used to provide contributions of premixed cleaning/switching fuel and/or its components to a main fuel to adjust the fuel parameters, for example, the viscosity and/or temperature. Accordingly, a mixture of alternative (for example pyrolysis oil) or crude oil based fuel (for example HFO fuel) and premixed cleaning/switching fuel and/or its components may be provided to operate ICE 2100.

While the above is generally directed to multi-fuel power plants, various aspects may also be implemented in single fuel power plants. For example, a single fuel power plant may be configured for being operated with pyrolysis based fuel as main fuel only. The aspects relating to cleaning the treatment unit, conditioning unit, and recirculating unit may be implemented based on a cleaning fluid (not used for operating the engine).

### Industrial Applicability

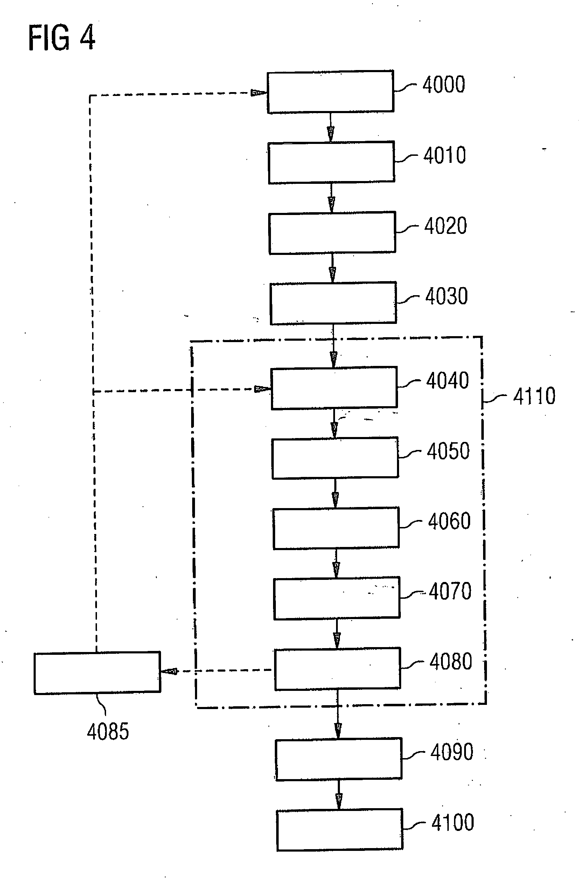

Referring to Fig. 4 and Fig. 1, an exemplary switch over process from HFO operation to pyrolysis oil operation may include the following steps that may be performed while the ICE may be continuously operated.

Operating ICE with HFO as a main fuel (step 4000): HFO treatment unit 330 and crude oil based fuel conditioning section 112C may be configured to ensure the required viscosity of 6-20 cSt by heating the HFO to 150-160 °C. Any unburned HFO is kept within the fuel recirculating cycle. Circulation tank 122 may thus be refilled with HFO only.

### Switching to operating ICE with Diesel fuel as main fuel (step 4010):

Crude oil based fuel conditioning section 112C may be provided with Diesel fuel from Diesel fuel tank 232. Accordingly, circulation tank 122 may be refilled with Diesel fuel only and the fuel recirculating cycle continuously may be changed to a pure Diesel fuel operation. Thereby, the temperature of common components within conditioning unit 112 as well as the components of fuel recirculating cycle may be reduced. Conditioning unit may ensure the required viscosity of 2-4 cSt by providing the Diesel fuel at, for example, 18-20 °C. Diesel fuel may in general be provided in a temperature range between 10 °C to 70 °C.

### Operating ICE with Diesel fuel only (step 4020):

Crude oil based fuel conditioning section 112C may ensure the required viscosity. Any unburned Diesel fuel may be kept within the fuel recirculating cycle and may be cooled with fuel cooling unit 124. Circulation tank may be refilled with Diesel fuel only.

### Switching to operating ICE with the cleaning fuel as main fuel (step 4030):

Cleaning fuel conditioning section 112B may be provided with cleaning fuel from cleaning fuel tanks or from cleaning fuel being composed in cleaning fuel treatment unit 320. Circulation tank 122 may be refilled with cleaning fuel only. Cleaning fuel treatment unit 320 and cleaning fuel conditioning section 112B may ensure the required viscosity of the cleaning fuel. Initially, the fuel recirculating cycle may be opened via valve unit(s) 126A/126B (2126A/2126B as shown in Fig. 3) and any unburned fuel mixture of Diesel fuel and cleaning may be accumulated within Diesel fuel/cleaning fuel waste tank 244 using second switching unit 118. Then, valve unit(s) 126A/126B (2126A/2126B as shown in Fig. 3) may close the fuel recirculating cycle such that all of its components may be cleaned from crude oil based fuel remaining by the cleaning fuel such that the fuel recirculating cycle may become essentially free of crude oil based fuel remains. During the cleaning process, first release valve unit 126A/126B/2126A may reconnect Diesel fuel/cleaning fuel waste tank 244 at least partly the outlet of engine fuel system 121 or for limited periods of time to speed up the cleaning process.

Referring to Fig. 3, an alternative procedure for switching to operating the ICE with the cleaning fuel as main fuel may be applied in case a specific cleaning fuel conditioning section 112B for the cleaning fuel is not provided and instead the cleaning fuel is directly provided to the fuel recirculating cycle. In that case, the cleaning fuel may be added via supply valve unit 2417 while at the same time the flow of Diesel to circulation tank 2122 is stopped.

### Operating ICE with cleaning fuel only (step 4040):

Cleaning fuel treatment unit 320 and cleaning fuel conditioning section 112B may ensure the required viscosity of 8-20 cSt by providing the cleaning fuel at a temperature within the range of 18-62 °C. Any unburned cleaning fuel may be kept within the fuel recirculating cycle and may be cooled with fuel cooling unit 124, if required. Circulation tank 112 may be refilled with cleaning fuel only.

Referring to Fig. 3, an alternative procedure for operating the ICE with cleaning fuel only may include operating the various pumps (such as ethanol pump 2382 and cleaning fuel pump 2385) such that the viscosity of the fuel provided is acceptable.

### Switching to operating ICE with a pyrolysis oil based fuel as main fuel (step 4050):

Pyrolysis oil based fuel conditioning section 112A may be provided with pyrolysis based fuel from pyrolysis oil based fuel tank 212 via pyrolysis oil based fuel treatment unit 310. Circulation tank 112 may be refilled with pyrolysis oil based fuel. Pyrolysis oil based fuel treatment unit 310 and pyrolysis oil based fuel conditioning section 112A may ensure the required viscosity of the pyrolysis oil based fuel. Initially, the fuel recirculating cycle may be opened via valve unit(s) 126A/126B (2126A/2126B as shown in Fig. 3) and any unburned fuel mixture of alternative fuel and cleaning may be accumulated within switch over tank 128A of first switching unit 116 and then be returned to pyrolysis oil based fuel conditioning section 112A and/or reusable pyrolysis oil/cleaning fuel mixture tank 214. Valve unit(s) 126A/126B (2126A/2126B as shown in Fig. 3) may close the fuel recirculating cycle such that the alternative fuel/cleaning fuel mixture may be recirculated until - due to the refilling by the alternative fuel only - the fuel recirculating cycle essentially contains only alternative fuel.

### Operating ICE with pyrolysis oil based fuel only (step 4060):

Pyrolysis oil based fuel fuel treatment unit 310 and pyrolysis oil based fuel conditioning section 112A may ensure the required viscosity of, for example, 12-28 cSt by providing the alternative fuel at a temperature within the range of 62-65 °C. Any unburned pyrolysis oil may be kept within the recirculation unit and may be cooled with fuel cooling unit 124, if required. Circulation tank 122 may be refilled with the pyrolysis oil based fuel only.

### Switching back to operating ICE with cleaning fuel as main fuel (step 4070):

It may be switched to refill circulation tank 122 with cleaning fuel. Initially, fuel recirculating cycle may be decoupled via valve unit(s) 126A/126B (2126A/2126B as shown in Fig. 3) and the unburned fuel mixture of pyrolysis oil based fuel and cleaning fuel may be returned to conditioning unit 112 (not indicated in Fig. 1) or reusable pyrolysis oil/cleaning fuel mixture tank 214 using first switching unit 116. Then, valve unit(s) 126A/126B (2126A/2126B as shown in Fig. 3) may close fuel recirculating cycle that is refilled with cleaning fuel only such that all components of the fuel recirculating cycle may be cleaned until the fuel recirculating cycle may be essentially free of any pyrolysis oil. During the cleaning process, valve unit(s) 126A/126B (2126A/2126B as shown in Fig. 3) may at least be partly reconnected to reusable pyrolysis oil/cleaning fuel mixture tank 214 (for example, after reconnecting fuel cooling unit 124) to speed up the cleaning process.

Operating ICE with cleaning fuel only (step 4080) may correspond essentially to step 4040 summarized above.

### Switching back to operating ICE with crude oil based fuel as main fuel (step 4090):

Crude oil based fuel conditioning section 112C may be provided with a crude oil based fuel such as Diesel fuel from crude oil based fuel tank section 230. Circulation tank 122 may be refilled with the crude oil based fuel only. Crude oil based fuel treatment units and crude oil based fuel conditioning section 112C may ensure the required viscosity of the crude oil based fuel. Valve unit(s) 126A/126B (2126A/2126B as shown in Fig. 3) may be maintained closed such that fuel mixture may be maintained in the fuel recirculating cycle and used to operate the engine. In view of the refilling with crude oil based fuel only, the part of cleaning fuel may continuously decrease. Alternatively, the fuel recirculating cycle may be opened via valve unit(s) 126A/126B (2126A/2126B as shown in Fig. 3) and any unburned fuel mixture of crude oil based fuel and cleaning fuel may be accumulated within Diesel fuel/cleaning fuel waste tank 244 via second switching unit 118.

Operating ICE with crude oil based fuel only (step 4100) may be based essentially on steps 4000 to 4020 as summarized above.

During the various steps, control unit 40 may control the operation parameters of the power plant system 1, in particular ICE 100, such as fuel viscosity, fuel temperature, fuel pressure, and fuel injection timing by controlling the various components of the power plant system 1, in particular ICE 100, in accordance with the various operating conditions associated with the respective fuels.

The switching time of step 4030 and step 4050 may be optimized, for example, by reducing the time period during which ICE 100 may be operated with cleaning fuel only. Additionally, the switching time may be influenced by how much one either bums any unused fuel mixture (fuel recirculating cycle closed) or provides those fuel mixtures directly to the switch over tanks 128A, 128B (fuel recirculating cycle opened).

Step 4000 to step 4100 illustrated above relate to a switching process between crude oil based fuel operation as main fuel and alternative fuel operation as main fuel wherein crude oil based fuel operation may be used to start the multi-fuel power plant. In that case, the cleaning fuel may be used to clean the fuel recirculating cycle in-between crude oil based fuel operation and alternative fuel operation such that any contact of alternative fuel and crude oil based fuel may be avoided or at least be reduced to an acceptable degree. For such a switching process, one may refer to the cleaning fuel as a switch over fuel or switching fuel.

Besides the switching between the fuels, the sequence disclosed above or some parts of it may be applied when turning ICE 100 off and on. For example, following step 4080, ICE 100 may be stopped (step 4085). Restarting ICE 100 may then be performed at step 4000 or at step 4040, for example. In Fig. 2, the stop and start up process is indicated by dotted lines. Thus, the configurations and methods disclosed herein may allow a simple stopping and start up procedure of a power plant for alternative fuels.

In some embodiments, the cleaning fuel may be used to start ICE 100, for example, to perform the warm up process of ICE 100. In that case, there may be no switching between crude oil based fuel operation and alternative fuel operation. Accordingly, an exemplary operation of ICE 100 may be based on step 4040 to step 4080 only (indicated by a dashed box 4110 in Fig. 4) whereby those steps may be performed while ICE 100 may be continuously operated. An exemplary multi-fuel power plant for cleaning fuel / alternative fuel operation may not include those components shown in Fig. 1 that relate to crude oil based fuel operation, for example, second switching unit 118, switch over line 132B, crude oil based fuel tank section 230, HFO treatment unit 330.

Referring to Fig. 5 and Fig. 3, an exemplary fast switch over process from pyrolysis oil operation to cleaning fuel operation may include the following steps that may be performed while the ICE may be continuously operated. The fast switch over process may be integrated in the process disclosed in connection with Fig. 4. Moreover, the fast switch over process may be accompanied by a cleaning process of the pyrolysis oil based fuel treatment unit disclosed in connection with Fig. 7.

### Operating ICE with pyrolysis oil based fuel only (step 5000):

Pyrolysis oil based fuel conditioning section 2112A may ensure the required viscosity of, for example, 12-28 cSt by providing the pyrolysis oil based fuel at a temperature within the range of 62-65 °C. Any unburned pyrolysis oil may be kept within the recirculation unit and may be cooled with fuel cooling unit 124, if required. Circulation tank 2122 may be refilled with the pyrolysis oil based fuel only.

### Detecting a parameter requiring switching to cleaning fuel operation (step 5010):

During operation of the engine with pyrolysis based fuel, a parameter is detected indicating a decrease in quality of pyrolysis oil based fuel. The detection may be performed by fuel sensors (such as viscosity or temperature sensors) as well as performance monitoring or exhaust monitoring parameters. A control signal may be generated that initiates the fast switch to the cleaning fuel.

### Switching to operating ICE with cleaning fuel as main fuel (step 5020):

To reduce the remaining time, ICE 2100 is operated with the low quality pyrolysis oil based fuel, the cleaning fuel is directly provided to the fuel recirculating cycle. Specifically, the cleaning fuel may be added via supply valve unit 2417 while at the same time the flow of pyrolysis oil based fuel to circulation tank 2122 is stopped and first release valve 2126A is opened such that any unused fuel exiting engine unit 2101 may be released into switch over tank 2128A.

### Releasing remaining pyrolysis oil based fuel from fuel recirculating cycle (step 5030):

The pyrolysis oil based fuel remaining downstream of first release valve 2126A may be released from fuel recirculating cycle by opening second release valve 2126B.

In case there is no release valve available downstream of circulation tank 2122, the remaining fuel in the corresponding piping may be mixed to the cleaning fuel in a controlled manner and combusted by ICE such that (pyrolysis oil based fuel) conditioning section 2112A and the fuel recirculating cycle may be cleaned from pyrolysis oil based fuel.

In some embodiments a further release valve may be available downstream of circulation tank 2122 such that the pyrolysis oil based fuel may be released from circulation tank 2122. At the same time, providing cleaning fuel upstream of (pyrolysis oil based fuel) conditioning section 2112A may allow cleaning the same and releasing any fuel mix to switch over tank 2128A.

### Operating ICE with the cleaning fuel as main fuel (step 5040):

Referring to Fig. 3, operating the ICE with cleaning fuel only may include operating the various pumps (such as ethanol pump 2382 and cleaning fuel pump 2385) such that the viscosity of the fuel provided is acceptable at supply valve unit 2417. Any release valves within fuel recirculating cycle are closed such that any unused cleaning fuel exiting engine unit 2101 may circulate within fuel recirculating cycle. Once it is confirmed that acceptable pyrolysis oil based fuel parameters are ensured it may be returned to step 5000.

Referring to Fig. 6 and Fig. 3, an exemplary emergency switch off process of pyrolysis oil operation of a power plant system, specifically a power house, may include the following steps. The emergency switch off process may be accompanied by a cleaning process of the pyrolysis oil based fuel treatment unit disclosed in connection with Fig. 7.

### Operating ICE with pyrolysis oil based fuel only (step 6000):

Pyrolysis oil based fuel conditioning section 2112A may ensure the required viscosity of, for example, 12-28 cSt by providing the pyrolysis oil based fuel at a temperature within the range of 62-65 °C. Any unburned pyrolysis oil may be kept within the recirculation unit and may be cooled with fuel cooling unit 124, if required. Circulation tank 2122 may be refilled with the pyrolysis oil based fuel only.

### Detecting a parameter requiring emergency switch off of ICE 2100 (step 6010):

During operation of the engine with pyrolysis based fuel, a parameter is detected requiring immediate turn off of the engine to avoid damages. The detection may be performed by fuel sensors (such as viscosity or temperature sensors) as well as performance monitoring or exhaust monitoring parameters. A control signal may be generated that initiates the emergency switch off of the engine, including a turn off of pumps for the pyrolysis oil based fuel supply such as feed pumps 2318A.

### Flushing the pyrolysis oil based fuel conditioning section and the recirculation unit with cleaning fuel (step 6020):

Cleaning fuel may be provided at conditioning unit flushing valve unit 2502 and/or supply valve unit 2417 and released via release valves, for example, release valves 2126A, 2126B. Thereby, the engine fuel system as well as the conditioning unit are cleaned from pyrolysis oil based fuel and it can be returned to step 6000.

Referring to Fig. 7 and Fig. 2, an exemplary emergency switch off process of pyrolysis oil treatment operation may include the following steps.

### Treating pyrolysis oil in a treatment unit 1310 (step 7000):

Treating pyrolysis oil generates treated pyrolysis oil that can be stored in a treated pyrolysis oil tank and provided directly or via transportation to a power plant including an internal combustion engine that may be operated on a pyrolysis oil based fuel

### Detecting a parameter requiring emergency switch off of treatment unit 1310 (step 7010):

During operation of the treatment unit for treating pyrolysis oil, a parameter value is detected requiring immediate turn off of the treatment unit to avoid damages or it is requested to turn off the treatment unit, for example, for service purposes. The detection of the parameter may be performed by sensors (such as viscosity or temperature sensors). A control signal may be generated that initiates the emergency switch off of the treatment unit, including a turn off of pumps such as feed pumps 1318. When using the treatment unit at the site of a power plant, a signal indicating the internal combustion engine has ended operation may similarly be considered a signal requiring switch off of treatment unit 1310, in particular if a treated pyrolysis oil based fuel tank has only small remaining capacity.

### Flushing the treatment unit with cleaning fuel (fluid) (step 7020):

Cleaning fuel may be provided at flushing valve 1388 and released via second flushing valve 1390. Thereby, the treatment unit and in particular the treatment loop are cleaned from pyrolysis oil. Accordingly, during the switch off period of the treatment unit, pyrolysis oil may not damage its components such that the operability of the treatment unit may be ensured and it can be returned to step 7000.

In some embodiments, the cleaning of the treatment unit as well as the conditioning unit and the fuel recirculation unit may be performed with the cleaning fuel itself and/or its components and/or in a sequence flushing different fluids or fluid mixtures through the respective systems. The flexible configuration of cleaning fuel treatment unit 2320 allows to be controlled to provide a respective cleaning fuel or a sequence of requested mixtures, for example, by controlling pumps 2382 and 2384 accordingly.

One may consider castor oil, ethanol, and a cleaning fluid/fuel comprising castor oil and ethanol as examples of a cleaning medium. During the cleaning process, the composition of the cleaning medium may be adapted in dependence of, for example, the temperature state of the treatment unit. Moreover, the composition (for example the ratio of castor oil and ethanol) may be varied with time.

The cleaning of the treatment unit may be performed in case of the treatment unit directly providing the treated pyrolysis oil based fuel to the conditioning unit once a switch over process, a fast switch over process, or a switch off process has been performed. In case of the treatment unit being on site with the pyrolysis reactor but not the power house, the cleaning may be performed as need during operation/service of the pyrolysis reactor.

In some aspects, methods for treating pyrolysis oil for an internal combustion engine may comprise transferring heat from a treated pyrolysis oil to not yet treated pyrolysis oil, thereby preheating the not yet treated pyrolysis oil, heating the preheated pyrolysis oil to a treating temperature, and separating solid and/or liquid components from the heated pyrolysis oil. The methods may further comprise filtering the not yet treated pyrolysis oil, pumping the not yet treated pyrolysis oil, and/or cooling the treated pyrolysis oil.

In some aspects of the use of an ethanol-based fuel, consisting of, based on the total volume of ethanol and castor oil, 40 to 90 % by volume ethanol and 60 to 10 % by volume castor oil, and optionally including one or more additives in a total amount of up to 10 wt.-% of the total weight of the ethanol and castor oil, for cleaning a treatment unit, the ethanol content of the ethanol-based fuel may be 70 to 90 % by volume and the castor oil content is 30 to 10 % by volume and/or 80 to 90 % by volume and the castor oil content is 20 to 10 % by volume and/or 85 to 90 % by volume and the castor oil content is 15 to 10 % by volume and/or 40 to 80 % by volume and the castor oil content is 60 to 20 % by volume and/or 45 to 65 % by volume and the castor oil content is 55 to 35 % by volume and/or 45 to 55 % by volume and the castor oil content is 55 to 45 % by volume and/or 48 to 52 % by volume and the castor oil content is 52 to 48 % by volume and/ 50 % by volume and the castor oil content is 50 % by volume.

Moreover, in the use of an ethanol-based fuel for cleaning a treatment unit, the additive may be selected from the group consisting of thermal stabilizers, aging stabilizers, antioxidants, coloring agents, dyes, odor modifying agents, rust inhibitors, inhibitors of gum formation, metal deactivators, upper cylinder lubricants, friction modifiers, detergents, bacteriostatic agents, fungicides, microbiocides, and mixtures thereof, and/or wherein the one or more additive(s) is optionally included in a total amount of up to 5 wt.-% or up to 3 wt.-% of the total weight of the ethanol and castor oil.

The skilled person understands that, although the exemplary use of the terms such as crude oil based fuel, alternative fuel, pyrolysis oil, pyrolysis oil based fuel, and cleaning fuel/fluid may herein also be applied in applications that may not make use of a specific aspect implied by the term itself, in some embodiments those terms may be used for consistency.

In some embodiments, the power plant systems disclosed herein may be configured to be arranged within containers for ease of transportation of preconfigured systems. For example, a fuel recirculating unit, a conditioning unit, and a treatment unit (or sections therefrom) may be provided together within a single or within separate containers. Thereby, the required piping and mounting of the various components may be done prior assembly of the complete power plant system.

In some embodiments, the engine fuel system may be a common rail or a flexible camshaft technology fuel system each configured to provide fuel from an input to each of the cylinder units and to provide at an output unused fuel for recirculating the same within an engine fuel circle.

Herein, the term "internal combustion engine/ICE" may refer to internal combustion engines which may be used as main or auxiliary engines of stationary power providing systems such as power plants for production of heat and/or electricity as well as in ships/vessels such as cruiser liners, cargo ships, container ships, and tankers.

In addition, the term "internal combustion engine/ICE" as used herein is not specifically restricted and may comprises any engine, in which the combustion of a fuel occurs with an oxidizer to produce high temperature and pressure gases, which are directly applied to a movable component of ICE, such as pistons or turbine blades, and move it over a distance thereby generating mechanical energy. Thus, as used herein, the term "internal combustion engine" comprises piston engines and turbines, which can, for example, be operated with alternative fuels such as pyrolysis oil. The ICE may be self-ignition based engines.

The herein disclosed procedure may simplify pyrolysis oil applications and may be used, for example, in Caterpillar engine applications. Examples of such engines that are suitable for adaptation to alternative fuels include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm.

In the following, various aspects and embodiments relating to treating fuel for internal combustion engines and particularly to treating alternative fuels such as pyrolysis oil based fuels.

Aspect 1. A pyrolysis oil treatment unit (1310) for treating pyrolysis oil for being used as a fuel of an internal combustion engine (100), the pyrolysis oil treatment unit (1310) comprising:
at least one feed pump (1318) for pumping the pyrolysis oil through the pyrolysis oil treatment unit (1310);
a heat recuperator (1342) configured for transferring heat from treated pyrolysis oil passing through a heat dispensing fluid passage of the heat recuperator (1342) to untreated pyrolysis oil based fuel passing through a heat receiving fluid passage of the heat recuperator (1342), thereby providing preheated pyrolysis oil;
a final heater (1344) for heating the preheated pyrolysis oil to a treating temperature; and
a separation unit (1360) for separating solid and/or liquid components from the pyrolysis oil,
wherein the flow path within pyrolysis oil treatment unit (1310) is configured as a treatment loop (1340) that comprises in flow direction the heat receiving fluid passage of the heat recuperator (1342), the final heater (1344), the separation unit (1360), and the heat dispensing fluid passage of the heat recuperator (1342).

Aspect 2. The pyrolysis oil treatment unit (1310) of Aspect 1, further comprising a first flushing valve (1388) for providing a cleaning fluid upstream of the treatment loop (1340) into the flow path within fuel treatment unit (1310).

Aspect 3. The pyrolysis oil treatment unit (1310) of Aspect 2, wherein the at least one feed pump (1318) is provided upstream of the heat recuperator (1342) and the first flushing valve (1388) is provided upstream of the at least one feed pump (1318).

Aspect 4. The pyrolysis oil treatment unit (1310) of any one of the preceding Aspects, further comprising a second flushing valve (1390) for releasing fluid out of the treatment loop (1340).

Aspect 5. The pyrolysis oil treatment unit (1310) of Aspect 4, wherein the second flushing valve (1390) is provided downstream of the heat dispensing fluid passage of the heat recuperator (1342).

Aspect 6. The pyrolysis oil treatment unit (1310) of any one of the preceding Aspects, further comprising, provided upstream of the treatment loop (1340), at least one of a raw filter (1312) and/or a raw filter by-pass (1314), and, provided downstream of the heat dispensing fluid passage of the heat recuperator (1342), a treated pyrolysis oil cooler (1376) provided.

Aspect 7. The pyrolysis oil treatment unit (1310) of any one of the preceding Aspects, wherein the treated pyrolysis oil cooler (1376) is integrated into a cooling cycle (1378) comprising a cooling media and/or a storage tank (1380), and/or the final heater (1344) is integrated into a heating cycle (1346) comprising a heating media and/or a storage tank (1348), and/or the fuel treatment unit (1310) comprises one or more control systems (1350A, 1350B) for controlling the cooling cycle (1378) and/or the heating cycle (1346).

Aspect 8. The pyrolysis oil treatment unit (1310) of any one of the preceding Aspects, wherein the separation unit (1360) further comprises a decanter (1362) for separating solid sludge, a separator (1366) for separating liquid sludge, and/or a by-pass (1370) for by-passing the decanter (1362) and/or the separator (1366).

Aspect 9. A pyrolysis oil treatment system comprising:
a tank arrangement (20) comprising a pyrolysis oil tank (1212), at least one cleaning medium tank (1222, 1224, 1226), and a reusable pyrolysis oil/cleaning medium mixture tank (1214); and
a pyrolysis oil treatment unit (1310) of any one of Aspect 1 to Aspect 8.

Aspect 10. The pyrolysis oil treatment system of Aspect 9, wherein a beginning of the flow path within the pyrolysis oil treatment unit (1310) is fluidly connected to the pyrolysis oil tank (1212), the first flushing valve (1388) is fluidly connected to the at least one cleaning medium tank (1222, 1224, 1226), and an end of the flow path within pyrolysis oil treatment unit (1310) is fluidly connected to the reusable pyrolysis oil/cleaning medium mixture tank (1214) via a second flushing valve (1390).

Aspect 11. The pyrolysis oil treatment system of Aspect 9 or Aspect 10, wherein the tank arrangement (20) further comprises a treated pyrolysis oil tank (1250) and the outlet of the pyrolysis oil treatment unit (1310) is fluidly connected to the treated pyrolysis oil tank (1250) via a return valve (1381) and/or the treatment unit system further comprises a control system (1350E) for controlling at least one of the first flushing valve (1388), the second flushing valve (1390), and the return valve (1381).

Aspect 12. The pyrolysis oil treatment system of any one of Aspect 9 to Aspect 11, wherein the at least one cleaning medium tank (1222, 1224, 1226) includes at least one of a castor oil tank (1222), an ethanol tank (1224), and a cleaning fluid tank (1226).

Aspect 13. The pyrolysis oil treatment system of Aspect 12, wherein the castor oil tank (1222), the ethanol tank (1224), and/or the cleaning fluid tank (1226) are fluidly connected to a cleaning fluid treatment unit (1320) that is configured to provide a mixture of ethanol and castor oil at a preset volume ratio.

Aspect 14. A power plant system (1) comprising:
a pyrolysis oil treatment system of any one of Aspect 9 to Aspect 13; and
a power house (10) with an internal combustion engine (100) for operation with the pyrolysis oil.

Aspect 15. Use of an ethanol-based fuel, consisting of, based on the total volume of ethanol and castor oil, 40 to 90 % by volume ethanol and 60 to 10 % by volume castor oil, and optionally including one or more additives in a total amount of up to 10 wt.-% of the total weight of the ethanol and castor oil, for cleaning a treatment unit (1310) according to any one of claim 1 to claim 8 from pyrolysis oil.

Although the preferred embodiments of this invention have been described herein, improvements and modifications may be incorporated without departing from the scope of the following claims.

## Claims

1. A pyrolysis oil treatment system for treating pyrolysis oil for being used as a fuel of an internal combustion engine (100), the pyrolysis oil treatment system comprising:
at least one pyrolysis oil tank (1212);
at least one cleaning medium tank (1222, 1224, 1226);
at least one treated pyrolysis oil tank (1250);
at least one reusable pyrolysis oil/cleaning medium mixture tank (1214); and
at least one pyrolysis oil treatment unit (1310), wherein the at least one pyrolysis oil treatment unit (1310) is fluidly connected via a first flushing valve (1388) to the at least one pyrolysis oil tank (1212) and the at least one cleaning medium tank (1222, 1224, 1226) to receive pyrolysis oil and cleaning medium respectively therefrom, and the at least one pyrolysis oil treatment unit (1310) is further fluidly connected via a second flushing valve (1390) to the at least one treated pyrolysis oil tank (1250) and to the at least one reusable pyrolysis oil/cleaning medium mixture tank (1214).

2. The pyrolysis oil treatment system of claim 1, further configured to provide cleaning medium from the at least one cleaning medium tank (1222, 1224, 1226) to the at least one pyrolysis oil treatment unit (1310) to thereby flush out any pyrolysis oil and/or pyrolysis oil/cleaning medium mixture and/or cleaning medium out of the at least one pyrolysis oil treatment unit (1310) into the at least one reusable pyrolysis oil/cleaning medium mixture tank (1214).

3. The pyrolysis oil treatment system of claim 1 or claim 2, further comprising a control unit (40) configured to control the first flushing valve (1388) and the second flushing valve (1390) for flushing of the at least one pyrolysis oil treatment unit (1310) with the cleaning medium from the at least one cleaning medium tank (1222, 1224, 1226).

4. The pyrolysis oil treatment system of any one of the preceding claims, further comprising a fuel line (1311) fluidly connecting the at least one pyrolysis oil treatment unit (1310) and the at least one treated pyrolysis oil tank (1250) and comprising the second flushing valve (1390) and a return fuel line (1392) fluidly connecting the second flushing valve (1390) with the at least one reusable pyrolysis oil/cleaning medium mixture tank (1214).

5. The pyrolysis oil treatment system of any one of the preceding claims, wherein the at least one pyrolysis oil treatment unit (1310) comprises at least one feed pump (1318) fluidly arranged downstream of the first flushing valve (1388).

6. The pyrolysis oil treatment system of any one of the preceding claims, wherein the at least one cleaning medium tank (1222, 1224, 1226) comprises a premixed cleaning fluid tank (1226), an ethanol tank (1224), and/or a castor oil tank (1222).

7. The pyrolysis oil treatment system of any one of the preceding claims, further comprising a cleaning fluid treatment unit (1320), a castor oil tank (1222), and an ethanol tank (1224), and
the castor oil tank (1222) and the ethanol tank (1224) are fluidly connected to the cleaning fluid treatment unit (1320) that is configured to provide a mixture of ethanol and castor oil at an adjustable volume ratio.

8. The pyrolysis oil treatment system of claim 7, further comprising a control system (1350E) for controlling the adjustable volume ratio at which the mixture of ethanol and castor oil is provided by the cleaning fluid treatment unit (1320).

9. A power plant system (1) comprising:
a pyrolysis oil treatment system of any one of the preceding claims; and
a power house (10) with a conditioning unit (112) fluidly connected to the pyrolysis oil treatment system via a fuel line (1313) and an internal combustion engine (100) fluidly connected to the conditioning unit (112) and configured for operation with a pyrolysis oil based fuel.

10. The power plant system (1) of claim 9, wherein the conditioning unit (112) comprises a pyrolysis oil conditioning sections (112A), and
the cleaning fuel treatment unit (1320) is fluidly connectable to the pyrolysis oil conditioning section (112A) and the cleaning fuel conditioning section (112B).

11. The power plant system (1) of claim 9 or claim 10, wherein a control unit is further configured, in case of an emergency shut off of the at least one pyrolysis oil treatment unit (1310) or a switching process to a fuel different from a pyrolysis oil based fuel, to initiate a flushing of the at least one pyrolysis oil treatment unit (1310).

12. A method for operating a pyrolysis oil treatment unit (1310) of an internal combustion engine during a shut off procedure of the pyrolysis oil treatment unit (1310), the method comprising:
receiving a signal indicating the request of shutting off the operation of the pyrolysis oil treatment unit (1310);
flushing the pyrolysis oil treatment unit (1310) with a cleaning medium; and
releasing a mixture of cleaning medium and alternative fuel from the pyrolysis oil treatment unit (1310).

13. The method of claim 12, further comprising
providing at least one of a pre-mixed cleaning fluid, ethanol, castor oil, or a mixture thereof at a preset or adjustable ratio to the pyrolysis oil treatment unit (1310) as a cleaning medium.

14. The method of claim 12 or claim 13, further comprising
controlling the ratio in dependence of the temperature state of the pyrolysis oil treatment unit (1310) and/or varying the ratio with time when performing the cleaning process of the pyrolysis oil treatment unit (1310).

15. Use of an ethanol-based fuel, consisting of, based on the total volume of ethanol and castor oil, 40 to 90 % by volume ethanol and 60 to 10 % by volume castor oil, and optionally including one or more additives in a total amount of up to 10 wt.-% of the total weight of the ethanol and castor oil, for cleaning a pyrolysis oil treatment unit (1310) of a pyrolysis oil treatment system according to any one of claim 1 to claim 8 from pyrolysis oil.

## Patentansprüche

1. Pyrolyseölbehandlungssystem zum Behandeln von Pyrolyseöl zur Benutzung als Kraftstoff eines Verbrennungsmotors (100) mit
mindestens einem Pyrolyseöl-Tank (1212),
mindestens einem Reinigungsmedium-Tank (1222, 1224, 1226),
mindestens einem behandeltes-Pyrolyseöl-Tank (1250),
mindestens einem wiederverwendbares-Pyrolyseöl/Reinigungsmediumgemisch-Tank(1214)und
mindestens einer Pyrolyseölbehandlungseinheit (1310), wobei die mindestens eine Pyrolyseölbehandlungseinheit (1310) über ein erstes Spülventil (1388) mit dem mindestens einen Pyrolyseöl-Tank (1212) und dem mindestens einen Reinigungsmedium-Tank (1222, 1224, 1226) zum Empfangen von Pyrolyseöl und Reinigungsmedium fluidverbunden ist und die mindestens eine Pyrolyseölbehandlungseinheit (1310) über ein zweites Spülventil (1390) mit dem mindestens einen behandeltes-Pyrolyseöl-Tank (1250) und dem mindestens einen wiederverwendbares-Pyrolyseöl/Reinigungsmediumgemisch-Tank (1214) fluidverbunden ist.

2. Pyrolyseölbehandlungssystem nach Anspruch 1, ferner dazu ausgebildet, ein Reinigungsmedium von dem mindestens einen Reinigungsmedium-Tank (1222, 1224, 1226) der mindestens einen Pyrolyseölbehandlungseinheit (1310) bereitzustellen, um dadurch Pyrolyseöl und/oder Pyrolyseöl/Reinigungsmediumgemisch und/oder Reinigungsmedium aus der mindestens einen Pyrolyseölbehandlungseinheit (1310) in den mindestens einen wiederverwendbares-Pyrolyseöl/Reinigungsmediumgemisch-Tank (1214) bereitzustellen.

3. Pyrolyseölbehandlungssystem nach Anspruch 1 oder Anspruch 2, ferner mit einer Steuerungseinheit (40), die dazu ausgebildet ist, das erste Spülventil (1388) und das zweite Spülventil (1390) zum Spülen der mindestens eine Pyrolyseölbehandlungseinheit (1310) mit dem Reinigungsmedium von dem mindestens einen Reinigungsmedium-Tank (1222, 1224, 1226) anzusteuern.

4. Pyrolyseölbehandlungssystem nach einem der vorhergehenden Ansprüche ferner mit
einer Kraftstoffleitung (1311), die die mindestens eine Pyrolyseölbehandlungseinheit (1310) und den mindestens einen behandeltes-Pyrolyseöl-Tank (1250) fluidverbindet und das zweite Spülventil (1390) aufweist und eine Kraftstoffrückleitung (1392), die das zweite Spülventil (1390) mit dem mindestens einen wiederverwendbares Pyrolyseöl/Reinigungsmediumgemisch-Tank (1214) fluidverbindet.

5. Pyrolyseölbehandlungssystem nach einem der vorhergehenden Ansprüche, wobei die mindestens eine Pyrolyseölbehandlungseinheit (1310) mindestens eine strömungsmäßig unterhalb des ersten Spülventils (1388) angeordnete Förderpumpe (1318) aufweist.

6. Pyrolyseölbehandlungssystem nach einem der vorhergehenden Ansprüche, wobei der mindestens eine Reinigungsmedium-Tank (1222, 1224, 1226) einen vorgemischtes-Reinigungsfluid-Tank (1226), einen Ethanol-Tank (1224) und/oder einen Rizinusöl-Tank (1222) aufweist.

7. Pyrolyseölbehandlungssystem nach einem der vorhergehenden Ansprüche, ferner mit
einer Reinigungsfluidbehandlungseinheit (1320), einem Rizinusöl-Tank (1222) und einem Ethanol-Tank (1224) und wobei
der Rizinusöl-Tank (1222) und der Ethanol-Tank (1224) mit der Reinigungsfluidbehandlungseinheit (1320) fluidverbunden sind, welche dazu ausgebildet ist, eine Mischung aus Ethanol und Rizinusöl bei einem einstellbaren Volumenverhältnis bereitzustellen.

8. Pyrolyseölbehandlungssystem nach Anspruch 7, ferner mit
einem Steuerungssystem (1350E) zum Steuern des einstellbaren Volumenverhältnisses, bei dem die Mischung aus Ethanol und Rizinusöl von der Reinigungsfluidbehandlungseinheit (1320) bereitgestellt wird.

9. Kraftwerksanlagensystem (1) mit
einem Pyrolyseölbehandlungssystem nach einem der vorhergehenden Ansprüche und
einem Kraftwerk (10) mit einer Konditioniereinheit (112), die mit dem Pyrolyseölbehandlungssystem über eine Kraftstoffleitung (1313) fluidverbunden ist, und mit einem Verbrennungsmotor (100), der mit der Konditioniereinheit (112) fluidverbunden ist und zum Betrieb mit einem pyrolyseölbasierten Kraftstoff ausgebildet ist.

10. Kraftwerksanlagensystem (1) nach Anspruch 9, wobei die Konditioniereinheit (112) einen Pyrolyseölkonditionierabschnitt (112A) aufweist und
die Reinigungskraftstoffbehandlungseinheit (1320) mit dem Pyrolyseölkonditionierabschnitt (112A) und dem Reinigungskraftstoffkonditionierabschnitt (112B) fluidverbindbar ist.

11. Kraftwerksanlagensystem (1) nach Anspruch 9 oder Anspruch 10, wobei eine Steuerungseinheit dazu ausgebildet ist, im Falle eines Notausvorgangs der mindestens einen Pyrolyseölbehandlungseinheit (1310) oder eines Wechselprozesses zu einem anderen Kraftstoff als dem pyrolyseölbasierten Kraftstoff ein Spülen der mindestens einen Pyrolyseölbehandlungseinheit (1310) zu veranlassen.

12. Verfahren zum Betreiben einer Pyrolyseölbehandlungseinheit (1310) eines Verbrennungsmotors während eines Abschaltvorgangs der Pyrolyseölbehandlungseinheit (1310) mit
Empfangen eines Signals, welches die Anforderung zum Abschalten des Betriebs der Pyrolyseölbehandlungseinheit (1310) anzeigt,
Spülen der Pyrolyseölbehandlungseinheit (1310) mit einem Reinigungsmedium und Ablassen einer Mischung aus Reinigungsmedium und Alternativ-Kraftstoff von der Pyrolyseölbehandlungseinheit (1310).

13. Verfahren nach Anspruch 12, ferner mit
Bereitstellen eines vorgemischten Reinigungsfluids, Ethanol, Rizinusöl und/oder einer Mischung derselben bei einem voreingestellten oder einstellbaren Verhältnis für die Pyrolyseölbehandlungseinheit (1310) als Reinigungsmedium.

14. Verfahren nach Anspruch 12 oder Anspruch 13, ferner mit
Steuern des Verhältnisses in Abhängigkeit des Temperaturzustands der Pyrolyseölbehandlungseinheit (1310) und/oder Variieren des Verhältnisses mit der Zeit, wenn der Reinigungsprozess der Pyrolyseölbehandlungseinheit (1310) durchgeführt wird.

15. Verwendung eines ethanolbasierten Kraftstoffs mit, basierend auf dem Gesamtvolumen von Ethanol und Rizinusöl, 40 bis 90 Volumenprozent Ethanol und 60 bis 10 Volumenprozent Rizinusöl, und optional aufweisend ein oder mehrere Additive in einem Gesamtanteil bis zu 10 Gewichtsprozent des Gesamtgewichts von Ethanol und Rizinusöl, zum
Reinigen einer Pyrolyseölbehandlungseinheit (1310) eines Pyrolyseölbehandlungssystems gemäß einem der Ansprüche 1 bis Anspruch 8 von Pyrolyseöl.

## Revendications

1. Système de traitement d'huile de pyrolyse pour traiter l'huile de pyrolyse destinée à être utilisée comme combustible d'un moteur à combustion interne (100), le système de traitement d'huile de pyrolyse comprenant :
au moins un réservoir d'huile de pyrolyse (1212) ;
au moins un réservoir de milieu de nettoyage (1222, 1224, 1226) ;
au moins un réservoir d'huile de pyrolyse traitée (1250) ;
au moins un réservoir de mélange d'huile de pyrolyse / milieu de nettoyage réutilisable (1214) ; et
au moins une unité de traitement d'huile de pyrolyse (1310), dans lequel l'au moins une unité de traitement d'huile de pyrolyse (1310) est reliée de manière fluidique par une première soupape de rinçage (1388) à l'au moins un réservoir d'huile de pyrolyse (1212) et l'au moins un réservoir de milieu de nettoyage (1222, 1224, 1226) pour recevoir l'huile de pyrolyse et le milieu de nettoyage respectivement de ceux-ci, et l'au moins une unité de traitement d'huile de pyrolyse (1310) est en outre reliée de manière fluidique par une seconde soupape de rinçage (1390) à l'au moins un réservoir d'huile de pyrolyse traitée (1250) et à l'au moins un réservoir d'huile de pyrolyse / milieu de nettoyage réutilisable (1214).

2. Système de traitement d'huile de pyrolyse selon la revendication 1, configuré en outre pour fournir un milieu de nettoyage de l'au moins un réservoir de milieu de nettoyage (1222, 1224, 1226) vers l'au moins une unité de traitement d'huile de pyrolyse (1310) pour ainsi rincer un(e) quelconque huile de pyrolyse et/ou mélange d'huile de pyrolyse / milieu de nettoyage et/ou milieu de nettoyage de l'au moins une unité de traitement d'huile de pyrolyse (1310) dans l'au moins un réservoir de mélange d'huile de pyrolyse / milieu de nettoyage réutilisable (1214).

3. Système de traitement d'huile de pyrolyse selon la revendication 1 ou 2, comprenant en outre une unité de commande (40) configurée pour commander la première soupape de rinçage (1388) et la seconde soupape de rinçage (1390) pour rincer l'au moins une unité de traitement d'huile de pyrolyse (1310) avec le milieu de nettoyage provenant de l'au moins un réservoir de milieu de nettoyage (1222, 1224, 1226).

4. Système de traitement d'huile de pyrolyse selon une quelconque des revendications précédentes, comprenant en outre une canalisation de combustible (1311) reliant de manière fluidique l'au moins une unité de traitement d'huile de pyrolyse (1310) et l'au moins un réservoir d'huile de pyrolyse traitée (1250) et comprenant la seconde soupape de rinçage (1390) et une canalisation de combustible retour (1392) reliant de manière fluidique la seconde soupape de rinçage (1390) avec l'au moins un réservoir de mélange d'huile de pyrolyse / milieu de nettoyage réutilisable (1214).

5. Système de traitement d'huile de pyrolyse selon une quelconque des revendications précédentes, dans lequel l'au moins une unité de traitement d'huile de pyrolyse (1310) comprend au moins une pompe d'alimentation (1318) agencée de manière fluidique en aval de la première soupape de rinçage (1388).

6. Système de traitement d'huile de pyrolyse selon une quelconque des revendications précédentes, dans lequel l'au moins un réservoir de milieu de nettoyage (1222, 1224, 1226) comprend un réservoir de fluide de nettoyage prémélangé (1226), un réservoir d'éthanol (1224), et/ou un réservoir d'huile de ricin (1222).

7. Système de traitement d'huile de pyrolyse selon une quelconque des revendications précédentes, comprenant en outre une unité de traitement de fluide de nettoyage (1320), un réservoir d'huile de ricin (1222) et un réservoir d'éthanol (1224), et
le réservoir d'huile de ricin (1222) et le réservoir d'éthanol (1224) sont reliés de manière fluidique à l'unité de traitement de fluide de nettoyage (1320) qui est configurée pour fournir un mélange d'éthanol et d'huile de ricin sur un rapport volumique réglable.

8. Système de traitement d'huile de pyrolyse selon la revendication 7, comprenant en outre un système de commande (1350E) pour commander le rapport volumique réglable au niveau duquel le mélange d'éthanol et d'huile de ricin est fourni par l'unité de traitement de fluide de nettoyage (1320).

9. Système moteur (1) comprenant :
un système de traitement d'huile de pyrolyse selon une quelconque des revendications précédentes ; et
une salle de machines (10) avec une unité de conditionnement (112) reliée de manière fluidique au système de traitement d'huile de pyrolyse via une canalisation de carburant (1313) et un moteur à combustion interne (100) relié de manière fluidique à l'unité de conditionnement (112) et configuré pour fonctionner avec un combustible à base d'huile de pyrolyse.

10. Système moteur (1) selon la revendication 9, dans lequel l'unité de conditionnement (112) comprend une section de conditionnement d'huile de pyrolyse (112A) et
l'unité de traitement de combustible de nettoyage (1320) peut être reliée de manière fluidique à la section de conditionnement d'huile de pyrolyse (112A) et la section de conditionnement de combustible de nettoyage (112B).

11. Système moteur (1) selon la revendication 9 ou 10, dans lequel une unité de commande est en outre configurée, dans le cas d'une coupure d'urgence de l'au moins une unité de traitement d'huile de pyrolyse (1310) ou d'un processus de commutation vers un combustible différent d'un combustible à base d'huile de pyrolyse, pour initier un rinçage de l'au moins une unité de traitement d'huile de pyrolyse (1310).

12. Procédé de fonctionnement d'une unité de traitement d'huile de pyrolyse (1310) d'un moteur à combustion interne durant une procédure de coupure de l'unité de traitement d'huile de pyrolyse (1310), le procédé comprenant :
la réception d'un signal indiquant la demande de coupure de fonctionnement de l'unité de traitement d'huile de pyrolyse (1310) ;
le rinçage de l'unité de traitement d'huile de pyrolyse (1310) avec un milieu de nettoyage ; et
la libération d'un mélange de milieu de nettoyage et de combustible alternatif de l'unité de traitement d'huile de pyrolyse (1310).

13. Procédé selon la revendication 12, comprenant en outre la fourniture d'au moins un fluide de nettoyage prémélangé, d'éthanol, d'huile de ricin, ou d'un mélange de ceux-ci selon un rapport prédéfini ou réglable dans l'unité de traitement d'huile de pyrolyse (1310) pour servir de milieu de nettoyage.

14. Procédé selon la revendication 12 ou 13, comprenant en outre la commande du rapport en fonction de l'état de température de l'unité de traitement d'huile de pyrolyse (1310) et/ou de la variation du rapport au temps lors de l'exécution du processus de nettoyage de l'unité de traitement d'huile de pyrolyse (1310).

15. Utilisation d'un combustible à base d'éthanol, composé, en fonction du volume total d'éthanol et d'huile de ricin, de 40 à 90 % en volume d'éthanol et de 60 à 10 % en volume d'huile de ricin, et en option comprenant un ou plusieurs additifs en une quantité totale allant jusqu'à 10 % en poids du poids total d'éthanol et d'huile de ricin, pour
nettoyer une unité de traitement d'huile de pyrolyse (1310) d'un système de traitement d'huile de pyrolyse selon une quelconque des revendications 1 à 8 de l'huile de pyrolyse.
